# EUROPÄISCHE PATENTSCHRIFT

(11) **EP 1 352 013 B1**
(45) Veröffentlichungstag und Bekanntmachung des Hinweises auf die Patenterteilung: **11.10.2006**
(21) Anmeldenummer: 01996576.3
(22) Anmeldetag: 15.11.2001
(51) Int. Cl.: C08J 3/21, B29B 9/00, B32B 5/16

(54) **PIGMENTZUBEREITUNGEN**
PIGMENT PREPARATIONS
PREPARATIONS DE PIGMENTS

(30) Priorität: 16.11.2000 DE 10057165
(43) Veröffentlichungstag der Anmeldung: 15.10.2003
(73) Patentinhaber: BASF Coatings AG, 48165 Münster (DE)
(72) Erfinder: ETZRODT, Günter, 70180 Stuttgart (DE); GREFENSTEIN, Achim, 67122 Altrip (DE); JENET, Wieland, 67551 Worms (DE); BAYER, Robert, 74889 Sinsheim (DE); RIEGER, Reinhold, 67071 Ludwigshafen (DE)
(86) Internationale Anmeldenummer: PCT/EP2001/013230
(87) Internationale Veröffentlichungsnummer: WO 2002/040576

(56) Entgegenhaltungen:
- WO-A-98/38253
- WO-A-98/58985
- WO-A-99/48988
- DD-A- 226 574
- DE-A- 3 839 865
- DE-A- 4 436 047
- DE-A- 19 907 703
- DE-A1- 2 500 664

## Beschreibung

Die vorliegende Erfindung betrifft neue Pigmentzubereitungen in Granulatform, welche durch
a) Dispergierung mindestens zwei voneinander verschiedener Pigmente (A) in einer Lösung eines thermoplastischen Polymeren (B) in einem organischen Lösungsmittel in An- oder Abwesenheit eines Dispergiermittels (C) und
b) Aufbringung der in Schritt a) erzeugten Dispersion als Schicht auf ein Granulat aus einem thermoplastischen Polymer (B'), das dem Polymer (B) entspricht oder von diesem verschieden ist, unter Entfernung des Lösungsmittels
erhältlich sind.

Außerdem betrifft die Erfindung Verfahren zur Herstellung dieser Pigmentzubereitungen und zur Einfärbung von Kunststoffmaterialien unter Verwendung der Pigmentzubereitungen sowie Kunststoffmaterialien, Verbundschichtfolien und Kunststofformteile, die mit den Pigmentzubereitungen eingefärbt sind.

Bei der Einfärbung von Kunststoffen können eine Reihe von Problemen auftreten, die auf die mangelhafte Einarbeitung der als Farbgeber verwendeten Pigmente zurückzuführen sind. So zeigen z.B. mit transparenten Pigmenten oder mit Glanzpigmenten eingefärbte Kunststoffe oftmals nicht das gewünschte Erscheinungsbild.

Kunststoffeinfärbungen mit Pigmenten sind dann transparent, wenn die üblicherweise < 15 nm großen Pigmentteilchen in feiner Verteilung vorliegen. Diese kleinen Primärpigmentteilchen neigen jedoch stark zur Agglomeration. Bei der Herstellung von Lacken werden solche Agglomerate unter großem Aufwand in speziellen Mühlen zerkleinert. Bei der Einarbeitung in Kunststoffe gelingt es in der Regel jedoch selbst bei Anwendung gleichläufiger Zweischneckenextruder nicht, transparente Einfärbungen mit dispergierharten Pigmenten, wie transparenten Eisenoxidpigmenten, Rußpigmenten und Perylenpigmenten, stippenfrei zu erzeugen, ohne den Kunststoff unverhältnismäßig zu schädigen.

Bei den auf plättchenförmigen Pigmentteilchen basierenden Glanzpigmenten ist bei der Einarbeitung in den Kunststoff oftmals eine Veränderung von Pigmentteilchengröße und -form zu beobachten. Die erhaltenen Einfärbungen sind dann koloristisch weniger attraktiv als mit diesen Pigmenten erzeugte Lackierungen und lassen Brillanz und den typischen seidigen Glanz aus der Tiefe vermissen.

Besonders große Schwierigkeiten treten dann auf, wenn der Kunststoff gleichzeitig mit einem mechanisch nicht beanspruchbaren Glanzpigment und einem transparenten und vielleicht zudem noch dispergierharten Farbpigment eingefärbt werden soll. Solche Pigmentkombinationen ergeben aber besonders interessante koloristische Effekte.

Diese Nachteile wirken sich insbesondere auch bei der Fertigung von Karosserieaußenbauteilen aus Kunststoff nachteilig aus und führen dazu, daß lackierte Metallbauteile koloristisch deutlich von mit den gleichen Pigmenten eingefärbten Kunststofformteilen abweichen. Kunststofformteile sind aber wegen ihres geringeren Gewichts gegenüber Metallbauteilen für die Automobilindustrie von großem Interesse.

Aus der DD-A-226 571 sind Pigment/Thermoplast-Konzentrate für die Thermoplastbeschichtung von Fotorohpapieren bekannt, die durch Trocknung einer Dispersion des Pigments in einer Lösung des thermoplastischen Polymers hergestellt werden.

Der Erfindung lag daher die Aufgabe zugrunde, die Einfärbung von Kunststoffen mit Pigmenten allgemein zu erleichtern und damit auch die Herstellung von koloristisch attraktiven Kunststoffeinfärbungen mit Pigmentkombinationen zu ermöglichen.

Demgemäß wurden die eingangs definierten Pigmentzubereitungen gefunden.

Außerdem wurde ein Verfahren zur Herstellung dieser Pigmentzubereitungen gefunden, welches dadurch gekennzeichnet ist, daß man
a) die Pigmente (A) in einer Lösung des Polymeren (B) in einem organischen Lösungsmittel in An- oder Abwesenheit eines Dispergiermittels (C) dispergiert und
b) die in Schritt a) erzeugte Dispersion unter Entfernung des Lösungsmittels als Schicht auf ein Granulat aus dem Polymer (B')aufbringt.

Weiterhin wurde ein Verfahren zur Einfärbung von Kunststoffmaterialien gefunden, welches dadurch gekennzeichnet ist, daß man die erfindungsgemäßen Pigmentzubereitungen in die Kunststoffmaterialien einarbeitet.

Die farbgebende Komponente (A) der erfindungsgemäßen Pigmentzubereitungen wird durch mindestens zwei voneinander verschiedene Pigmente aus der Gruppe der organischen Bunt-, Weiß- und Schwarzpigmente (Farbpigmente), der Flüssigkristallpigmente, der anorganischen Farbpigmente, der Glanzpigmente und der üblicherweise als Füllstoffe eingesetzten anorganischen Pigmente gebildet.

Die Pigmente können dabei auf beliebige Weise miteinander kombiniert sein. Geeignet sind z.B.:
- Kombinationen mindestens zweier organischer Farbpigmente, Kombinationen mindestens zweier anorganischer Farbpigmente
- Kombinationen mindestens eines organischen Farbpigments mit mindestens einem anorganischen Farbpigment
- Kombinationen mindestens zweier Glanzpigmente
- Kombinationen mindestens eines transparenten organischen Farbpigments (insbesondere Bunt- und/oder Schwarzpigments) mit mindestens einem Glanzpigment
- Kombinationen mindestens eines transparenten anorganischen Farbpigments (insbesondere Bunt- und/oder Schwarzpigments) mit mindestens einem Glanzpigment
- Kombinationen mindestens eines transparenten organischen Farbpigments (insbesondere Bunt- und/oder Schwarzpigments) und mindestens eines transparenten anorganischen Farbpigments (insbesondere Bunt- und/oder Schwarzpigments) mit mindestens einem Glanzpigment.

Im folgenden seien als Beispiele für geeignete organische Farbpigmente im einzelnen genannt:

| | |
|---|---|
| - Monoazopigmente: | C.I. Pigment Brown 25; |
| | C.I. Pigment Orange 5, 36 und 67; |
| | C.I. Pigment Red 3, 48:2, 48:3, 48:4, 52:2, 63, 112 und 170; |
| | C.I. Pigment Yellow 3, 74, 151 und 183; |
| - Disazopigmente: | C.I. Pigment Red 144, 166, 214 und 242; |
| | C.I. Pigment Yellow 83; |
| - Anthrachinonpigmente: | C.I. Pigment Yellow 147 und 177; |
| | C.I. Pigment Violet 31; |
| - Benzimidazolpigmente: | C.I. Pigment Orange 64; |
| -Chinacridonpigmente: | C.I. Pigment Orange 48 und 49; |
| | C.I. Pigment Red 122, 202 und 206; |
| | C.I. Pigment Violet 19; |
| - Chinophthalonpigmente: | C.I. Pigment Yellow 138; |
| - Diketopyrrolopyrrolpigmente: | C.I. Pigment Orange 71 und 73; |
| | C.I. Pigment Red, 254, 255, 264 und 270; |
| - Dioxazinpigmente: | C.I. Pigment Violet 23 und 37; |
| - Indanthronpigmente: | C.I. Pigment Blue 60; |
| - Isoindolinpigmente: | C.I. Pigment Yellow 139 und 185; |
| - Isoindolinonpigmente: | C.I. Pigment Orange 61; |
| | C.I. Pigment Yellow 109 und 110; |
| - Metallkomplexpigmente: | C.I. Pigment Yellow 153; |
| - Perinonpigmente: | C.I. Pigment Orange 43; |
| - Perylenpigmente: | C.I. Pigment Black 32; |
| | C.I. Pigment Red 149, 178 und 179; |
| | C.I. Pigment Violet 29; |
| - Phthalocyaninpigmente: | C.I. Pigment Blue 15, 15:1, 15:2, 15:3, 15:4, 15:6 und 16; |
| | C.I. Pigment Green 7 und 36; |
| - C.I. Pigment Black 1 (Anilinschwarz); | |

Geeignete anorganische Farbpigmente sind z.B.:

| | |
|---|---|
| - Weißpigmente: | Titandioxid (C.I. Pigment White 6), Zinkweiß, Farbenzinkoxid; Zinksulfid, Lithopone; |
| - Schwarzpigmente: | Eisenoxidschwarz (C.I. Pigment Black 11), Eisen-Mangan-Schwarz, Spinellschwarz (C.I. Pigment Black 27); Ruß (C.I. Pigment Black 7); |
| - Buntpigmente: | Chromoxid, Chromoxidhydratgrün; Chromgrün (C.I. Pigment Green 48); Cobaltgrün (C.I.Pigment Green 50); Ultramaringrün; |
| | Kobaltblau (C.I. Pigment Blue 28 und 36); Ultramarinblau; Manganblau; |
| | Ultramarinviolett; Kobalt- und Manganviolett; |
| | Eisenoxidrot (C.I. Pigment Red 101); Cadmiumsulfoselenid (C.I. Pigment Red 108); Molybdatrot (C.I. Pigment Red 104); Ultramarinrot; |
| | Eisenoxidbraun, Mischbraun, Spinell- und Korundphasen (C.I. Pigment Brown 24, 29 und 31), Chromorange; |
| | Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34); Bismutvanadat (C.I. Pigment Yellow 184). |

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.

Neben den organischen Flüssigkristallpigmenten bilden die Glanz- oder Effektpigmente eine besonders interessante Klasse geeigneter Pigmente.

Die optische Wirkung der Glanzpigmente beruht auf der gerichteten Reflexion von Licht an den überwiegend flächig ausgebildeten, zueinander parallel ausgerichteten, metallischen oder stark lichtbrechenden Pigmentteilchen. Je nach Zusammensetzung der Pigmentplättchen erzeugen Interferenz-, Reflexions- und Absorptionsphänomene winkelabhängige Farb- und Helligkeitseindrücke.

Die Glanzpigmente können sowohl einphasig als auch mehrphasig aufgebaut sein.

Als einphasige Glanzpigmente sind plättchenförmige Metallpigmente wie die im Handel erhältlichen Aluminiumplättchen von besonderem Interesse.

Die mehrphasig aufgebauten Glanzpigmente können auf plättchenförmigen Substratteilchen basieren, die ein- oder mehrfach beschichtet werden, oder auf ebenfalls schichtartig aufgebauten Teilchen, die durch aufeinanderfolgendes filmartiges Aufbringen der gewünschten Schichtmaterialien auf eine Trägerfolie, anschließendes Entfernen der Trägerfolie von dem mehrschichtigen Film und dessen Zerkleinerung auf Pigmentteilchengröße hergestellt werden.

Bei der erstgenannten Variante stellen die bereits genannten plättchenförmigen Metallpigmente, insbesondere die Aluminiumplättchen, und oxidische Plättchen wie Plättchen aus vorzugsweise mit Aluminium und Mangan dotiertem Eisen(III)oxid und Glimmerplättchen bevorzugte Substratmaterialien dar. Bei der zweitgenannten Variante werden als Materialien für die zentrale Schicht bevorzugt Metalle wie Aluminium und Oxide wie Siliciumdioxid eingesetzt. Als Beschichtungsmaterialien dienen bei beiden Varianten üblicherweise Metalloxide und Metalle.

Als Beispiele für einfach beschichtete Pigmentplättchen seien mit Titandioxid, Eisen(III)oxid oder niederen Titanoxiden und/oder Titanoxynitriden beschichtete Glimmer- und Aluminiumplättchen genannt. Goniochromatische Glanzpigmente, die besonders ausgeprägte winkelabhängige Farbwechsel zeigen, können durch Belegen der Substratplättchen (z.B. Aluminium-, Eisenoxid- oder bereits titandioxidbeschichtete Glimmerplättchen) mit abwechselnden Schichten niedrigbrechender Materialien wie Siliciumdioxid und Magnesiumfluorid und hochbrechender Materialien wie Eisen(III)oxid, Titandioxid und den weiteren bereits genannten Titanverbindungen erhalten werden.

Derartige mehrphasige Glanzpigmente sind bekannt und im Handel z.B. unter den Namen Paliocrom® und Variocrom® (BASF), Iriodin®, Xirallic® und Colorstream® (Merck) sowie Chromaflair® (Flex Products) erhältlich.

Als Komponente (B) enthalten die erfindungsgemäßen Pigmentzubereitungen ein oder mehrere thermoplastische Polymere.

Beispiele für bevorzugte Polymere (B) sind die Acrylharze, Styrolpolymere, Polycarbonate, Polyamide, Polyester, thermoplastischen Polyurethane, Polyethersulfone, Polysulfone, Vinylpolymere oder deren Mischungen, wobei die Acrylharze, die Styrolpolymere und die thermoplastischen Polyurethane besonders geeignet sind.

Als geeignete Acrylharze seien die Polyalkyl- und/oder -arylester der (Meth)Acrylsäure, Poly(meth)acrylamide und Poly(meth)acrylnitril genannt. Bevorzugte Acrylharze sind Polyalkylmethacrylate, auch in schlagzäh modifizierter Form, wobei Polymethylmethacrylat (PMMA) und schlagzähmodifiziertes Polymethylmethacrylat (HI(High Impact)-PMMA) besonders bevorzugt sind. Vorzugsweise enthält das PMMA einen Anteil von in der Regel nicht mehr als 20 Gew.-% an (Meth)Acrylatcomonomeren wie n-Butyl(meth)acrylat oder Methylacrylat. HI-PMMA ist durch geeignete Zusätze schlagzäh ausgerüstet. Als Schlagzähmodifier kommen z.B. EPDM-Kautschuke, Polybutylacrylate, Polybutadien, Polysiloxane oder Methacrylat/Butadien/Styrol(MBS)- und Methacrylat/Acrylnitril/Butadien/Styrol-Copolymerisate in Frage. Geeignete schlagzähmodifizierte PMMA sind beispielsweise beschrieben von M. Stickler, T. Rhein in Ullmann's encyclopedia of industrial chemistry Vol. A21, Seiten 473-486, VCH Publishers Weinheim, 1992, und H. Domininghaus, Die Kunststoffe und ihre Eigenschaften, VDI-Verlag Düsseldorf, 1992. Geeignete Polymethylmethacrylate sind dem Fachmann im übrigen bekannt und z.B. unter den Handelsmarken Lucryl® (BASF) und Plexiglas® (Röhm GmbH) erhältlich.

Als Styrolpolymere kommen alle (Co)Polymeren in Frage, die vollständig oder in Teilen aus vinylaromatischen Verbindungen aufgebaut sind. Geeignete vinylaromatische Verbindungen sind z.B. Styrol und Styrolderivate wie ein- oder mehrfach alkyl- und/oder halogensubstituiertes Styrol sowie entsprechende Naphthylverbindungen. Bevorzugt wird auf Styrolcopolymerisate zurückgegriffen. Hierzu zählen beispielsweise Pfropfcopolymerisate von Acrylnitril und Styrol auf Butadienkautschuke, auch als ABS-Polymerisate bekannt (z.B. das Handelsprodukt Terluran® der BASF), Pfropfcopolymerisate von Styrol und Acrylnitril auf Polyalkylacrylatkautschuke, auch als ASA-Polymerisate bekannt (z.B. das Handelsprodukt Luran® S der BASF), oder Styrol-Acrylnitril-Copolymerisate, auch SAN-Copolymerisate genannt (z.B. das Handelsprodukt Luran® der BASF). Geeignete Styrolpolymerisate werden nachfolgend ebenfalls unter den für das Hinterspritzen in Frage kommenden Kunststoffmaterialien eingehend beschrieben. Als Polymer (B) besonders bevorzugte Styrolpolymere sind ASA-Polymerisate.

Geeignete Polycarbonate sind an sich bekannt. Unter Polycarbonate im Sinne der Erfindung fallen auch Copolycarbonate. Die (Co)Polycarbonate haben vorzugsweise ein Molekulargewicht (Gewichtsmittelwert M_{w}, bestimmt mittels Gelpermeationschromatographie in Tetrahydrofuran gegen Polystyrolstandards) im Bereich von 10 000 bis 200 000 g/mol. Bevorzugt liegt M_{w} im Bereich von 15 000 bis 100 000 g/mol. Dies entspricht relativen Lösungsviskositäten im Bereich von 1,1 bis 1,5, gemessen in 0,5 gew.-%iger Lösung in Dichlormethan bei 25°C, bevorzugt von 1,15 bis 1,33.

Polycarbonate sind z.B. entsprechend den Verfahren der DE-C-1 300 266 durch Grenzflächenpolykondensation oder gemäß dem Verfahren der DE-A-14 95 730 durch Umsetzung von Diphenylcarbonat mit Bisphenolen erhältlich. Bevorzugtes Bisphenol ist 2,2-Di(4-hydroxyphenyl)propan, üblicherweise als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfan, 4,4'-Dihydroxydiphenylether, 4,4'-Dihydroxydiphenylsulfid, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane oder Dihydroxycyclopentane, insbesondere 1,1-Bis(4-hydroxyphenyl)-3,3,5-trimethylcyclohexan, sowie Mischungen der vorgenannten Dihydroxyverbindungen.

Besonders bevorzugte Polycarbonate sind solche auf der Basis von Bisphenol A oder Bisphenol A zusammen mit bis zu 80 mol-% der vorstehend genannten aromatischen Dihydroxyverbindungen.

Es können auch Copolycarbonate gemäß der US-A-3 737 409 verwendet werden. Von besonderem Interesse sind Copolycarbonate auf der Basis von Bisphenol A und Bis-(3,5-dimethyl-4-hydroxyphenyl)sulfon und/oder 1,1-Bis(4-hydroxyphenyl)-3,3,5-trimethylcyclohexyl, die sich durch hohe Wärmeformbeständigkeit auszeichnen.

Kommerziell erhältlich sind z.B. die Polycarbonate Makrolon® (Bayer) und Lexan® (GE Plastics).

Geeignete Polyamide (PA) können Polykondensationsprodukte von Diaminen und Dicarbonsäuren, z.B. Adipinsäure und Hexamethylendiamin, oder von Aminosäuren, z.B. Aminoundecansäure, sein oder durch ringöffnende Polymerisation von Lactamen, z.B. Caprolactam oder Laurinlactam, hergestellt werden. Beispielhaft seien Ultramid® (BASF AG), Zytel® und Minlon® (Du Pont), Sniamid®, Technyl® und Amodel® (Nyltech), Durethan® (Bayer), Akulon® und Stanyl® (DSM), Grilon®, Grilamid® und Grivory® (EMS), Orgamid® und Rilsan® (Atochem) und Nivionplast® (Enichem) genannt.

Als Polyamide können auch Mischungen aus Polyamiden und Polyethylenionomeren, z.B. Ethen/Methacrylsäure-Copolymere, enthaltend beispielsweise Natrium-, Zink und/oder Lithiumgegenionen (u.a. Surlyn® (DuPont)) eingesetzt werden.

Als Polyester sind die höher- bis hochmolekularen Veresterungsprodukte von zweiwertigen Säuren, insbesondere Terephthalsäure, mit zweiwertigen Alkoholen, vor allem Ethylenglykol, geeignet. Unter den Polyalkylenterephthalaten ist Polyethylenterephthalat (PET; Arnite® (Akzo), Grilpet® (EMS-Chemie), Valox® (GEP)) besonders geeignet.

Thermoplastische Polyurethane (TPU) sind schließlich die Umsetzungsprodukte von Diisocyanaten und langkettigen Diolen. Gegenüber den aus Polyisocyanaten (enthaltend mindestens drei Isocyanatgruppen) und mehrwertigen Alkoholen (enthaltend mindestens drei Hydroxygruppen), insbesondere Polyether- und Polyesterpolyolen, hergestellten Polyurethan-Schäumen weisen thermoplastische Polyurethane keine oder nur eine geringfügige Vernetzung auf und verfügen demgemäß über eine lineare Struktur. Thermoplastische Polyurethane sind dem Fachmann hinlänglich bekannt und finden sich z.B. im Kunststoff-Handbuch, Band 7, Polyurethane, Hrsg. G. Oertel, 2. Aufl., Carl Hanser Verlag, München, 1983, insbesondere auf den Seiten 428-473, beschrieben. Als im Handel erhältliches Produkt sei hier z.B. Elastolan® (Elastogran) genannt.

Die Polymerklassen der Polyethersulfone und Polysulfone sind dem Fachmann ebenfalls bekannt und unter den Handelsnamen Ultrason® E und Ultrason® S kommerziell erhältlich.

Als geeignetes Vinylpolymer sei schließlich beispielsweise Polyvinylchlorid (PVC) genannt.

Vorzugsweise werden 0,1 bis 60 Gew.-%, vor allem 5 bis 20 Gew.-%, des Pigmentgemischs (A), bezogen auf das Polymer (B), eingesetzt.

Das Polymer (B) umhüllt die Pigmentteilchen und verhindert eine Agglomeration selbst feinster Pigmentteilchen. Es "passiviert" feinteilige Metallpigmente, wie Aluminiumplättchen, und macht sie damit für die Kunststoffeinfärbung zugänglich, die bislang aufgrund ihrer Staubexplosionsgefährlichkeit bzw. Brandgefährlichkeit durch ihren Gehalt an brennbaren organischen Lösungsmitteln nicht möglich war. Schließlich schützt es insbesondere auch die mechanisch nicht beanspruchbaren Pigmente bei der Einarbeitung in das Anwendungsmedium.

Gelegentlich kann es von Vorteil sein, wenn bei der Herstellung der erfindungsgemäßen Pigmentzubereitungen ein Dispergiermittel (C) anwesend ist, das in die Polymerhülle eingebaut wird. Dies ist beispielsweise dann der Fall, wenn besonders transparente Einfärbungen erzielt werden sollen oder besonders schwierig zu dispergierende Pigmente wie Ruß in den Kunststoff einzuarbeiten sind. Ein weiterer, unerwarteter, vorteilhafter Effekt ist, daß die Viskosität der Pigmentdispersion im gelösten Kunststoff bei Anwesenheit eines Dispergiermittels (C) deutlich erniedrigt wird und damit auch die Dispergierarbeit verringert wird.

Als Dispergiermittel (C) eignen sich insbesondere polymere Verbindungen, die durch Umsetzung von (Co)Polymeren von C₁-C₂₅-Alkylestern α,β-ungesättigter Carbonsäuren, die eine terminale Hydroxylgruppe aufweisen, mit mehrwertigen Isocyanaten und weitere Umsetzung der erhaltenen Produkte mit Ammoniak oder polyfunktionellen Aminen erhältlich sind.

Bei den (Co)Polymeren handelt es sich bevorzugt um Polyalkyl(meth)acrylate, wobei Poly-C₁-C₈-alkyl(meth)acrylate besonders bevorzugt und Polymethylmethacrylat und Polybutylmethacrylat, vor allem Copolymere von Methyl- und Butylmethacrylat, ganz besonders bevorzugt sind. Das Molekulargewicht dieser (Co)Polymeren liegt in der Regel bei 200 bis 50 000, vorzugsweise bei 1 000 bis 10 000 g/mol.

Zur Einführung der terminalen Hydroxylgruppe können die (Co)Polymere mit Initiatoren, die beim Zerfall ein Hydroxylradikal liefern, z.B. Hydroperoxiden wie Tetrahydrofuranhydroperoxid, oder Reglern, die eine Hydroxylfunktion enthalten, z.B. Thioalkoholen wie 2-Hydroxyethanthiol, umgesetzt werden.

Als mehrwertige Isocyanate werden vorzugsweise Mischungen aliphatischer Polyisocyanate mit einer mittleren Funktionalität von 3 bis 6, vorzugsweise 3,5 bis 5, Isocyanatgruppen pro mol eingesetzt. Die Isocyanatmenge wird bevorzugt so gewählt, daß 1,2 bis 3, insbesondere 1,5 bis 2,5, Isocyanatgruppen pro Hydroxylgruppe des (Co)Polymeren zur Reaktion gelangen, die verbleibenden Isocyanatgruppen werden durch Umsetzung mit Aminen in Harnstoffgruppen überführt.

Als Beispiel für besonders geeignete Isocyanatmischungen seien Mischungen von 0,1 bis 10 Gew.-%, vor allem 0,3 bis 8 Gew.-% eines Diisocyanats (z.B. Hexamethylendiisocyanat), 30 bis 80 Gew.-%, vor allem 42 bis 79 Gew.-%, eines Triisocyanats (z.B. trifunktionelles Biuret von Hexamethylendiisocyanat) und 20 bis 60 Gew.-%, vor allem 22 bis 50 Gew.-%, eines Isocyanats mit einer Funktionalität von 4 bis 10 (z.B. ein entsprechendes höherfunktionelles Biuret von Hexamethylendiisocyanat) genannt.

Geeignete polyfunktionelle Amine sind beispielsweise mehrwertige Alkyl- und Alkylenamine wie Propylamin, Butylamin, Ethylendiamin, Diethylentriamin, Triethylentetramin und höhere Polyethylenamine und Polyethylenimine sowie bevorzugt auch N,N'-Bis(aminopropyl)ethylendiamin.

Die als Dispergiermittel (C) bevorzugten Polyurethanharnstoff(meth)acrylate haben üblicherweise ein mittleres Molekulargewicht M_{w} von 1 000 bis 15 000 g/mol, bevorzugt von 8 000 bis 14 000 g/mol.

Diese Polyurethanharnstoff(meth)acrylate und ihre Herstellung werden in der DE-A-44 46 383 beschrieben.

Kommt ein Dispergiermittel (C) zum Einsatz, so liegen bevorzugte Mengen bei 1 bis 20 Gew.-%, bezogen auf die Gesamtmenge der Pigmente (A).

Die erfindungsgemäßen Pigmentzubereitungen enthalten dementsprechend in der Regel 0,1 bis 40 Gew.-%, insbesondere 1 bis 10 Gew.-%, der Komponente (A), 60 bis 99,9 Gew.-%, insbesondere 90 bis 99 Gew.-%, der Komponente (B) und (B') und 0 bis 8 Gew.-%, insbesondere 0 bis 2 Gew.-%, der Komponente (C).

Wesentlich für die vorteilhaften Anwendungseigenschaften der erfindungsgemäßen Pigmentzubereitungen ist die gleichmäßige Umhüllung der Pigmentteilchen (A) mit dem Polymer (B), die durch die erfindungsgemäße Herstellung über den Schritt a), bei dem die Pigmente (A) in einer Lösung des Polymeren (B) in einem organischen Lösungsmittel in An- oder Abwesenheit eines Dispergiermittels (C) auf einfache Weise homogen dispergiert werden, und den Schritt b), bei dem diese homogene Verteilung durch Aufbringung der in Schritt a) erzeugten Dispersion als Schicht auf ein Granulat aus einem thermoplastischen Polymer (B'), das dem Polymer (B) entspricht oder von diesem verschieden, aber mit diesem verträglich ist, unter Entfernung des Lösungsmittels in den festen Zustand überführt wird.

Für das erfindungsgemäße Herstellungsverfahren kommen alle Lösungsmittel in Betracht, in denen das Polymer (B) löslich ist und die unter den Trocknungsbedingungen so schnell verdampfen, daß die erzeugten Granulate nicht zusammenkleben. So sind z.B. im Fall von Polymethylmethacrylat Lösungsmittel mit einem Siedepunkt unter 80°C bevorzugt.

Beispielhaft seien folgende geeignete Lösungsmittelklassen genannt: aliphatische und alicyclische Ketone, Ether, aliphatische Alkohole, aliphatische Carbonsäureester, Lactone, aromatische Kohlenwasserstoffe und halogenierte Derivate dieser Lösungsmittel sowie chlorierte aliphatische Kohlenwasserstoffe. Bevorzugte Beispiele sind im einzelnen: Aceton, Hexafluoraceton, Isobutanol, Hexafluor-2-propanol, Essigsäureethylester, N-Methylpyrrolidon, Toluol, Xylol, Methylenchlorid und Chloroform. Besonders bevorzugt ist Aceton. Selbstverständlich können auch Gemische von Lösungsmitteln eingesetzt werden.

Die Lösungsmittelmenge ist an sich nicht kritisch, jedoch wird man zweckmäßigerweise nicht mehr Lösungsmittel einsetzen, als für das vollständige Lösen des Polymers (B) und zur Einstellung einer für den Dispergiervorgang geeigneten Viskosität nötig ist, um den Aufwand bei der Entfernung des Lösungsmittels in Schritt b) möglichst gering zu halten.

Verfahrenstechnisch geht man in Schritt a) des erfindungsgemäßen Verfahrens zur Herstellung der erfindungsgemäßen Pigmentzubereitungen, abgestimmt auf die Beständigkeit der Pigmente (A) gegen mechanische Beanspruchung, zweckmäßigerweise wie folgt vor: Handelt es sich um mechanisch beanspruchbare Pigmente (A), die eine transparente Einfärbung ergeben sollen, so mischt man die Pigmente (A), Polymer (B) in Granulat- oder Pulverform, gewünschtenfalls ein Dispergiermittel (C), gelöst oder als Feststoff, und Lösungsmittel miteinander und unterwirft dieses Gemisch einer Mahlung unter Einsatz hoher Scherkräfte, bei der sich gleichzeitig das Polymer (B) im Lösungsmittel löst. Man kann auch zuerst eine Lösung des Polymeren (B) herstellen und die Pigmente (A) dann darin dispergieren. Es ist auch möglich, die Pigmente (A) zunächst nur in der Lösung einer Teilmenge des Polymers (B) zu dispergieren und die erhaltene Dispersion anschließend mit weiterer Polymerlösung zu verdünnen. Man kann die Mahlung in einer Rührwerkskugelmühle unter Verwendung von Mahlkörpern, z.B. Glas- oder Zirkonoxidkugeln, mit einem Durchmesser von in der Regel 1 bis 4 mm durchführen. Für den Labormaßstab ist beispielsweise auch eine Skandex-Schüttelmaschine als Dispergieraggregat geeignet.

Bei mechanisch nicht so beanspruchbaren Pigmenten (A), z.B. bei den Glanzpigmenten, wählt man zweckmäßigerweise eine schonendere Art der Dispergierung, z.B. das Einrühren in die Lösung des Polymeren (B) mit einem Rührgerät, z.B. einem Flügel- oder Balkenrührer. Für den Labormaßstab eignet sich auch eine Dispergierung in einem geschlossenen Gefäß auf einem Rollbett bei niedriger Umdrehungszahl, bei der die oben genannten Mahlkörper anwesend sein können.

Diese beiden Vorgehensweisen können vorteilhaft miteinander kombiniert werden, wenn erfindungsgemäße Pigmentzubereitungen hergestellt werden sollen, welche Farbpigmente und Glanzpigmente enthalten, indem zunächst die Farbpigmente intensiv in die Lösung des Polymers (B) eingearbeitet werden und anschließend die Glanzpigmente schonend in der Dispersion der Farbpigmente im gelösten Polymer (B) dispergiert werden.

Generell können die erfindungsgemäßen Pigmentzubereitungen problemlos durch derartiges stufenweises Vorgehen hergestellt werden, indem die Pigmente (A) in Abhängigkeit von ihrer mechanischen Stabilität gegebenenfalls nacheinander in der Polymerlösung dispergiert werden.

Grundsätzlich eignen sich für den Schritt b) als Polymer (B') die bereits genannten thermoplastischen Polymere.

Die in Schritt a) erzeugte Dispersion wird als Schicht auf dieses Trägergranulat (B') aufgebracht, wobei das Mengenverhältnis von Träger zu Dispersion vorzugsweise so eingestellt wird, daß nach der Trocknung Schichtdicken von in der Regel 0,01 bis 2 mm, insbesondere 0,1 bis 0,5 mm, vorliegen und die Pigmente (A) dementsprechend in der Regel 0,1 bis 40 Gew.-%, vorzugsweise 1 bis 10 Gew.-%, der erhaltenen Pigmentzubereitung ausmachen.

Bei dieser Vorgehensweise kann die Gestalt der gebildeten Pigmentgranulate problemlos an die Gestalt der Kunststoffgranulate, die bei der Kunststoffeinfärbung als Ausgangsmaterial eingesetzt werden und üblicherweise Teilchengrößen von 1 bis 10 mm, vorzugsweise 2 bis 5 mm, aufweisen, angepaßt werden, so daß die beiden Granulate besonders einfach und homogen gemischt werden können.

Zur Herstellung dieser Pigmentgranulate können verschiedene Apparaturen verwendet werden.

Man kann die Pigmentdispersion z.B. in einem beheizbaren Mischaggregat mit dem Polymerträger (B') in Kontakt bringen und das Lösungsmittel durch Beheizung des Aggregats entfernen.

Besonders vorteilhaft kann man die Beschichtung des Trägers in einem Wirbelschichttrockner vornehmen, wobei zweckmäßigerweise wie folgt vorgegangen wird:

Der Polymerträger (B') wird mit einem auf eine Temperatur unterhalb des Klebpunktes des Polymers und oberhalb der Verdampfungstemperatur des Lösungsmittels erhitzten Wirbelgas, z.B. Luft, fluidisiert, und die Pigmentdispersion wird über ein oder mehrere Düsen, insbesondere Zweistoffdüsen, in die Wirbelschicht gesprüht. Die Eindüsung kann dabei kontinuierlich oder diskontinuierlich, von unten, von oben oder von der Seite erfolgen. Die Pigmentdispersion wird hierbei vollständig auf der Oberfläche des Trägergranulats abgeschieden, und es ergibt sich eine sehr fest haftende und keinen Abrieb zeigende Beschichtung.

Die erfindungsgemäßen Pigmentzubereitungen eignen sich hervorragend zur Einfärbung von Kunststoffen. Da sie leicht in den Kunststoffschmelzen verteilbar sind, kann auf Einarbeitungsmethoden, die die Pigmente und/oder auch den Kunststoff belasten, verzichtet werden. Die homogene Verteilung der Pigmente in dem aufgeschmolzenen Kunststoff wird dadurch erleichtert, daß jeweils nur eine dünne pigmentierte Kunststoffschicht vorliegt, die beidseitig von aufschmelzendem Kunststoff (innen von dem Trägerkunststoff, außen von dem einzufärbenden Kunststoff) umgeben ist.

Da mithilfe der erfindungsgemäßen Pigmentzubereitungen alle Arten von Pigmenten vorteilhaft in Kunststoffe eingearbeitet werden können, sind auch die unterschiedlichsten Einfärbungen problemlos möglich.

So können glasklare Kunststoffe, wie Polymethylmethacrylat, Polystyrol, Polyethylenterephthalat, Polycarbonat und Polyurethan, mit Kombinationen transparenter Pigmente, auch dispergierharter Pigmente, wie transparenter Eisenoxidpigmente, Rußpigmente und Perylenpigmente, hochtransparent und gleichzeitig sehr farbstark eingefärbt werden.

Auch die besonderen koloristischen Eigenschaften von Glanzpigmenten wie Brillanz, Farb- und Hell/Dunkel-Flops und seidiger Glanz aus der Tiefe, wie sie von Lackierungen bekannt sind, können durch Einarbeitung der erfindungsgemäßen Pigmentzubereitungen in Kunststoffen problemlos reproduziert und auf vorteilhafte weise durch Kombination mit transparenten Bunt- und Schwarzpigmenten modifiziert werden.

Die erfindungsgemäßen Pigmentzubereitungen ermöglichen zudem vorteilhaft eine gezielte Farbtoneinstellung über ein Mischsystem, das aus den Dispersionen jeweils eines Pigmentes (A) in einer Lösung des Polymeren (B) als einzelnen Mischkomponenten besteht. Der gewünschte Farbton wird zunächst farbmetrisch bestimmt, dann werden die Dispersionen der zur Einstellung dieses Farbtons erforderlichen Pigmente in den entsprechenden Mengen gemischt und zu einer erfindungsgemäßen Pigmentpräparation verarbeitet, die diesen Farbton bei Einarbeitung in das Anwendungsmedium ergibt.

Mit den erfindungsgemäßen Pigmentzubereitungen können Kunststoffe für alle erdenklichen Anwendungsgebiete, z.B. in Form von Folien, Platten, Profilen, Formteilen, Spritzgußteilen und Fasern, eingefärbt werden.

Vorzugsweise basieren die mit den erfindungsgemäßen Pigmentzubereitungen eingefärbten Kunststofformmassen auf Acrylharzen, Styrolpolymerisaten, Polycarbonaten, Polyestern, Polyamiden, Polyethersulfonen, Polysulfonen, Polyvinylchlorid, Polyetherimiden, Polyetherketonen, Polyphenylensulfiden, Polyphenylenethern oder deren Mischungen, die jeweils gegebenenfalls Zusatzstoffe enthalten können.

Von besonderer Bedeutung ist die Einarbeitung der erfindungsgemäßen Pigmentzubereitungen in die farbgebende Schicht von Verbundschichtplatten, die durch Thermoformen die gewünschten Formkörper ergeben, und von Verbundschichtfolien, aus denen durch Hinterprägen, Hinterspritzen, Hintergießen oder Hinterschäumen die gewünschten Formteile gebildet werden können oder die zum Kaschieren von Formteilen eingesetzt werden können.

Die ebenfalls erfindungsgemäßen Verbundschichtfolien können Drei- oder Zweischichtsysteme darstellen.

Die erfindungsgemäßen Verbundschichtfolien (häufig auch Hinterspritzfolien genannt) umfassen dementsprechend im wesentlichen in dieser Reihenfolge:
(1) mindestens eine Substratschicht (1), enthaltend ASA-Polymerisate, ABS-Polymerisate, Polycarbonate, Polyester, Polyamide, Polyetherimide, Polyetherketone, Polyphenylensulfide, Polyphenylenether oder Mischungen dieser Polymere, gewünschtenfalls eingefärbt mit den erfindungsgemäßen Pigmentzubereitungen,
(2) mindestens eine farbgebende Zwischenschicht (2), enthaltend Kunststofformmassen aus Acrylharzen, Styrolpolymeren, Polycarbonaten, Polyestern, Polyamiden, Polyethersulfonen, Polysulfonen, Polyvinylchorid, Polyurethanen oder deren Mischungen, eingefärbt mit den erfindungsgemäßen Pigmentzubereitungen, und
(3) mindestens eine transluzente oder transparente Deckschicht (3), enthaltend Poly(meth)acrylate, schlagzähe Poly(meth)acrylate, Fluor(co)polymere, ABS-Polymerisate, Polycarbonate, Polyethylenterephthalat, SAN-Copolymerisate oder deren Mischungen,
oder
(1) mindestens eine farbgebende Substratschicht (1'), enthaltend ASA-Polymerisate, ABS-Polymerisate, Polycarbonate, Polyester, Polyamide, Polyetherimide, Polyetherketone, Polyphenylsulfide, Polyphenylenether oder deren Mischungen, eingefärbt mit den erfindungsgemäßen Pigmentzubereitungen, und
(3) mindestens eine transluzente oder transparente Deckschicht (3), enthaltend Poly(meth)acrylate, schlagzähe Poly(meth)acrylate, Fluor(co)polymere, ABS-Polymerisate, Polycarbonate, Polyethylenterephthalat, SAN-Copolymerisate oder deren Mischungen.

Bevorzugt werden für die Substratschichten (1) bzw. (1') ASA-Polymerisate eingesetzt. Unter ASA-Polymerisaten werden im allgemeinen schlagzähmodifizierte Styrol/Acrylnitril-Polymerisate verstanden, bei denen Pfropfcopolymerisate von vinylaromatischen Verbindungen, insbesondere Styrol, und Vinylcyaniden, insbesondere Acrylnitril, auf Polyalkylacrylatkautschuken (Komponente X) in einer Copolymermatrix aus insbesondere Styrol und Acrylnitril (Komponente Y) vorliegen. In einer weiteren bevorzugten Ausführungsform wird auf Blends aus ASA-Polymerisaten und Polycarbonaten zurückgegriffen.

Besonders geeignete ASA-Polymerisate setzen sich zusammen aus einem Pfropfcopolymerisat (Komponente X) aus
(x1) 1 bis 99 Gew.-%, vorzugsweise 55 bis 80 Gew.-%, insbesondere 55 bis 65 Gew.-%, einer teilchenförmigen Pfropfgrundlage (X1) mit einer Glasübergangstemperatur unterhalb von 0°C, bevorzugt kleiner -20°C, besonders bevorzugt kleiner -30°C,
(x2) 1 bis 99 Gew.-%, vorzugsweise 20 bis 45 Gew.-%, insbesondere 35 bis 45 Gew.-%, einer Pfropfauflage (X2) aus den Monomeren, bezogen auf (X2),
(x21) 40 bis 100 Gew.-%, vorzugsweise 65 bis 85 Gew.-%, Einheiten des Styrols, eines substituierten Styrols oder eines (Meth)Acrylsäureesters oder deren Gemische, insbesondere des Styrols und/oder α-Methylstyrols als Komponente (X21) und
(x22) bis 60 Gew.-%, vorzugsweise 15 bis 35 Gew.-%, Einheiten des Acrylnitrils oder Methacrylnitrils, insbesondere des Acrylnitrils als Komponente (X22).

Komponente (X1) besteht im wesentlichen aus den Monomeren
(x11) 80 bis 99,99 Gew.-%, vorzugsweise 95 bis 99,9 Gew.-%, mindestens eines C₁-C₈-Alkylesters der Acrylsäure, vorzugsweise n-Butylacrylat und/oder Ethylhexylacrylat, als Komponente (X11),
(x12) 0,01 bis 20 Gew.-%, vorzugsweise 0,1 bis 5,0 Gew.-%, mindestens eines polyfunktionellen vernetzenden Monomeren, vorzugsweise Diallylphthalat und/oder Dicyclopentadienylacrylat (DCPA), als Komponente (X12).

Bei den Acrylatkautschuken (X1) handelt es sich vorzugsweise um Alkylacrylatkautschuke aus einem oder mehreren C₁-C₈-Alkylacrylaten, vorzugsweise C₄-C₈-Alkylacrylaten, wobei bevorzugt mindestens teilweise Butyl-, Hexyl-, Octyl- und/oder 2-Ethylhexylacrylat, insbesondere n-Butyl- und/oder 2-Ethylhexylacrylat, verwendet werden.

Diese Acrylatkautschuke (X1) enthalten bevorzugt 0,01 bis 20 Gew.-%, vorzugsweise 0,1 bis 5 Gew.-%, bezogen auf das Gesamtgewicht von X1, an vernetzend wirkenden bi- oder polyfunktionellen Monomeren (Vernetzungsmonomere). Beispiele hierfür sind Monomere, die zwei oder mehr zur Copolymerisation befähigte Doppelbindungen enthalten und die vorzugsweise nicht in 1,3-Stellung konjugiert sind. Geeignete Vernetzungsmonomere sind beispielsweise Divinylbenzol, Diallylmaleat, Diallylfumarat, Diallylphthalat, Diethylphthalat, Triallylcyanurat, Triallylisocyanurat, Tricyclodecenylacrylat, Dihydrodicyclopentadienylacrylat, Triallylphosphat, Allylacrylat und Allylmethacrylat. Als besonders günstiges Vernetzungsmonomer hat sich Dihydrodicyclopentadienylacrylat (DCPA) erwiesen (vgl. DE-C-1 260 135).

In die Alkylacrylatkautschuke (X1) können auch bis zu 30 Gew.-%, bezogen auf das Gesamtgewicht von (X1), "harte" Polymere bildende Monomere, wie Vinylacetat, (Meth)Acrylnitril, Styrol, substituiertes Styrol, Methylmethacrylat und/oder Vinylether einpolymerisiert sein.

Gemäß einer Ausführungsform der Erfindung dienen als Pfropfgrundlage (X1) vernetzte Acrylsäureesterpolymerisate mit einer Glasübergangstemperatur unter 0°C. Die vernetzten Acrylsäureesterpolymerisate sollen vorzugsweise eine Glasübergangstemperatur unter -20°C, insbesondere unter -30°C, besitzen.

Gemäß einer bevorzugten Ausführungsform ist die Pfropfgrundlage (X1) aus 15 bis 99,9 Gew.-%, insbesondere 70 bis 99,9 Gew.-%, C₁-C₈-Alkylestern der Acrylsäure, 0,1 bis 5 Gew.-%, insbesondere 0,1 bis 3 Gew.-%, Vernetzer und 0 bis 49,9 Gew.-%, insbesondere 0 bis 20 Gew.-% eines der angegebenen weiteren Monomere oder Kautschuke zusammengesetzt.

Geeignete Monomere zur Bildung der Pfropfauflage (X2) sind als Komponente (X21) z.B. Styrol, substituierte Styrole wie ein- oder mehrfach substituierte Alkyl- und/oder Halogenstyrole, z.B. α-Methylstyrol, und (Meth)Acrylsäureester wie Methylmethacrylat, 2-Ethylhexylacrylat und n-Butylacrylat, insbesondere Methylmethacrylat. Als Komponente (X22) kommen Acrylnitril und Methacrylnitril, insbesondere Acrylnitril in Frage.

Bei der Komponente (X) handelt es sich bevorzugt um Pfropfcopolymerisate. Die Pfropfcopolymerisate (X) haben im allgemeinen eine mittlere Teilchengröße d₅₀ von 50 bis 1 000 nm, bevorzugt von 50 bis 800 nm und besonders bevorzugt von 50 bis 600 nm. Bevorzugte Teilchengrößen der Pfropfgrundlage (X1) liegen im Bereich von 50 bis 350 nm, bevorzugt von 50 bis 300 nm und besonders bevorzugt von 50 bis 250 nm.

Das Pfropfcopolymerisat (X) kann ein- oder mehrstufig aufgebaut sein, d.h. der Pfropfkern wird von einer oder mehreren Pfropfhüllen umgeben. Mehrere Pfropfhüllen werden in der Regel durch schrittweises Pfropfen auf die Kautschukteilchen aufgebracht, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s.a. EP-A-230 282, DE-AS-36 01 419 und EP-A-269 861).

In einer bevorzugten Ausführungsform besteht die Komponente (X) aus einem mehrstufig aufgebauten Pfropfcopolymerisat, wobei die Pfropfstufen im allgemeinen aus harzbildenden Monomeren hergestellt sind und eine Glastemperatur Tg oberhalb von 30°C, vorzugsweise oberhalb von 50°C aufweisen. Der mehrstufige Aufbau dient unter anderem dazu, eine (Teil)-Verträglichkeit der Kautschukteilchen (X) mit der Komponente (Y) zu erzielen.

Gemäß einer weiteren bevorzugten Ausführungsform der Erfindung ist die Teilchengrößenverteilung der Komponente (X) bimodal, wobei in der Regel, bezogen auf das Gesamtgewicht der Komponente (X), 60 bis 90 Gew.-% eine mittlere Teilchengröße von 50 bis 200 nm und 10 bis 40 Gew.-% eine mittlere Teilchengröße von 50 bis 400 nm aufweisen.

Als mittlere Teilchengröße beziehungsweise Teilchengrößenverteilung werden die aus der integralen Massenverteilung bestimmten Größen angegeben. Bei den erfindungsgemäßen mittleren Teilchengrößen handelt es sich in allen Fällen um das Gewichtsmittel der Teilchengrößen, wie sie mittels einer analytischen Ultrazentrifuge entsprechend der Methode von W. Scholtan und H.

Lange, Kolloid-Z. und Z.-Polymere 250 (1972), Seiten 782-796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Massenverteilung bezeichnet wird, wird als der Teilchendurchmesser definiert, bei dem 50 Gew.-% der Teilchen einen kleineren Durchmesser haben als der Durchmesser, der dem d₅₀-Wert entspricht. Ebenso haben dann 50 Gew.-% der Teilchen einen größeren Durchmesser als der d₅₀-Wert. Zur Charakterisierung der Breite der Teilchengrößenverteilung der Kautschukteilchen werden neben dem d₅₀-Wert (mittlerer Teilchendurchmesser) die sich aus der integralen Massenverteilung ergebenden d₁₀- und d₉₀-Werte herangezogen. Der d₁₀- und d₉₀-Wert der integralen Massenverteilung sind entsprechend dem d₅₀-Wert definiert mit dem Unterschied, daß sie auf 10 beziehungsweise 90 Gew.-% der Teilchen bezogen sind. Der Quotient (d₉₀ - d₁₀)/d₅₀ stellt ein Maß für die Verteilungsbreite der Teilchengröße dar. Je kleiner Q ist, desto enger ist die Verteilung.

Pfropfcopolymerisate (X) können mittels Emulsions-, Lösungs-, Masse- oder Suspensionspolymerisation hergestellt werden. Bevorzugt ist die radikalische Emulsionspolymerisation, bei der in Gegenwart von Latices der Komponente (X1) bei Temperaturen bis 90°C unter Verwendung wasserlöslicher oder öllöslicher Initiatoren wie Peroxodisulfat oder Benzylperoxid oder mit Hilfe von Redoxinitiatoren die Monomere (X21) und (X22) aufgepfropft werden. Redoxinitiatoren können auch für Polymerisationen unterhalb von 20°C eingesetzt werden.

Geeignete Emulsionspolymerisationsverfahren sind z.B. beschrieben in den DE-A-28 26 925, DE-A-31 49 358 und in der DE-C-1 260 135.

Der Pfropfhüllenaufbau mittels Emulsionspolymerisation findet sich auch in den DE-A-32 27 555, DE-A-31 49 357, DE-A-31 49 358 und DE-A-34 14 118 beschrieben. Die Teilchengröße der Komponente (X) läßt sich bevorzugt nach den in der DE-C-1 260 135, DE-A-28 26 925 und in Applied Polymer Science, Band 9 (1965), Seite 2929, offenbarten Verfahren einstellen, insbesondere auch auf Werte im Bereich von 50 bis 1 000 nm. Polymerisate mit unterschiedlichen Teilchengrößenverteilungen sind beispielsweise gemäß DE-A-28 26 925 und US-A-5 196 480 herstellbar.

Zum Beispiel kann gemäß dem in der DE-C-1 260 135 beschriebenen Verfahren zunächst die Pfropfgrundlage (X1) erhalten werden, indem man C₁-C₈-Alkylester der Acrylsäure und Vernetzungsmonomere, gegebenenfalls zusammen mit weiteren Comonomeren, in wäßriger Emulsion in an sich bekannter Weise bei Temperaturen von 20 bis 100°C, vorzugsweise von 50 bis 80°C, polymerisiert. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise verwendet man Natriumsalze von Alkylsulfonaten oder Fettsäuren mit 10 bis 18 Kohlenstoffatomen. Gemäß einer Ausführungsform werden die Emulgatoren in Mengen von 0,5 bis 5 Gew.-%, insbesondere von 1 bis 2 Gew.-%, bezogen auf die bei der Herstellung der Pfropfgrundlage (X1) eingesetzten Monomeren, zugegeben. Im allgemeinen wird bei einem Gewichtsverhältnis von Wasser zu Monomeren von 2 : 1 bis 0,7 : 1 gearbeitet. Als Polymerisationsinitiatoren dienen insbesondere die gebräuchlichen Persulfate, beispielsweise Kaliumpersulfat. Es können jedoch auch Redoxsysteme zum Einsatz gelangen. Die Initiatoren werden im allgemeinen in Mengen von 0,1 bis 1 Gew.-%, bezogen auf die bei der Herstellung der Pfropfgrundlage (X1) eingesetzten Monomeren, zugegeben. Als weitere Polymerisationshilfsstoffe können übliche Puffersubstanzen, wie Natriumbicarbonat oder Natriumpyrophosphat, mit deren Hilfe pH-Werte von vorzugsweise 6 bis 9 eingestellt werden, sowie 0 bis 3 Gew.-% eines Molekulargewichtsreglers, wie Mercaptane, Terpinole oder dimeres α-Methylstyrol, mitverwendet werden.

Der erhaltene Latex aus vernetztem Acrylsäureesterpolymerisat wird gemäß einer Ausführungsform der Erfindung mit einem Monomerengemisch aus einer vinylaromatischen Verbindung (Komponente (X21)), z.B. Styrol, und einem Vinylcyanid (Komponente (X22)), z.B. Acrylnitril, gepfropft, wobei das Gewichtsverhältnis von z.B. Styrol zu Acrylnitril in dem Monomerengemisch im Bereich von 100 : 0 bis 40 : 60, vorzugsweise im Bereich von 65 : 35 bis 85 : 15, liegt. Vorteilhafterweise führt man diese Pfropfcopolymerisation wieder in wäßriger Emulsion unter den üblichen, vorstehend beschriebenen Bedingungen durch. Die Pfropfcopolymerisation kann zweckmäßig im gleichen System erfolgen wie die Emulsionspolymerisation zur Herstellung der Pfropfgrundlage (X1), wobei, falls notwendig, weiterer Emulgator und/oder Initiator zuzugeben wird. Das Monomerengemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfcopolymerisation dieses Gemisches in Gegenwart des vernetzten Acrylsäureesterpolymerisats wird bevorzugt so geführt, daß ein Pfropfgrad von 1 bis 99 Gew.-%, vorzugsweise 20 bis 45 Gew.-%, insbesondere 35 bis 45 Gew.-%, bezogen auf das Gesamtgewicht der Komponente (X), im Pfropfcopolymerisat (X) resultiert. Da die Pfropfausbeute bei der Pfropfcopolymerisation in der Regel nicht 100% beträgt, wird häufig eine etwas größere Menge des Monomerengemisches aus Styrol und Acrylnitril bei der Pfropfcopolymerisation eingesetzt, als es dem gewünschten Pfropfgrad entspricht. Die Steuerung der Pfropfausbeute bei der Pfropfcopolymerisation und somit des Pfropfgrades des fertigen Pfropfcopolymerisats (X) ist dem Fachmann geläufig und kann beispielsweise unter anderem durch die Dosiergeschwindigkeit der Monomeren oder durch Reglerzugabe erfolgen (Chauvel, Daniel, ACS Polymer Preprints 15 (1974), Seite 329 ff.). Bei der Emulsionspfropfcopolymerisation entstehen im allgemeinen etwa 5 bis 15 Gew.-%, bezogen auf das Pfropfcopolymerisat (X), an freiem, d.h. ungepfropftem Styrol/Acrylnitril-Copolymerisat. Der Anteil des Pfropfcopolymerisats (X) in dem bei der Pfropfcopolymerisation erhaltenen Polymerisationsprodukt wird nach der oben angegebenen Methode ermittelt.

Bei der Herstellung der Pfropfcopolymerisate (X) nach dem Emulsionsverfahren sind neben den gegebenen verfahrenstechnischen Vorteilen auch reproduzierbare Teilchengrößenveränderungen möglich, beispielsweise durch zumindest teilweise Agglomeration der Teilchen zu größeren Teilchen. Dies bedeutet, daß in den Pfropfcopolymerisaten (X) auch Polymere mit unterschiedlichen Teilchengrößen vorliegen können.

Komponente (Y) ist ein Copolymerisat, das im wesentlichen
(y1)40 bis 100 Gew.-%, vorzugsweise 60 bis 85 Gew.-%, Einheiten des Styrols, eines substituierten Styrols oder eines (Meth)Acrylsäureesters oder deren Gemische, insbesondere des Styrols und/oder α-Methylstyrols als Komponente (Y1),
(y2)bis 60 Gew.-%, vorzugsweise 15 bis 40 Gew.-%, Einheiten des Acrylnitrils oder Methacrylnitrils, insbesondere des Acrylnitrils als Komponente (Y2)
enthält.

Gemäß einer bevorzugten Ausführungsform der Erfindung beträgt die Viskositätszahl der Komponente (Y) 50 bis 90, vorzugsweise 60 bis 80, bestimmt nach DIN 53 726 an einer 0,5 gew.-%igen Lösung in Dimethylformamid.

Vorzugsweise ist Komponente (Y) ein amorphes Polymerisat, wie es z.B. vorstehend als Pfropfauflage (X2) beschrieben ist. Gemäß einer Ausführungsform der Erfindung wird als Komponente (Y) ein Copolymerisat von Styrol und/oder α-Methylstyrol mit Acrylnitril verwendet. Der Acrylnitrilgehalt in diesen Copolymerisaten der Komponente (Y) beträgt im allgemeinen 0 bis 60 Gew.-%, vorzugsweise 15 bis 40 Gew.-%, bezogen auf das Gesamtgewicht der Komponente B. Zur Komponente (Y) zählen auch die bei der Pfropfcopolymerisation zur Herstellung der Komponente (X) entstehenden freien, nicht gepfropften Copolymerisate aus vinylaromatischen Verbindungen und Vinylcyaniden, z.B. Styrol/Acrylnitril-Copolymerisate. Je nach den bei der Pfropfcopolymerisation für die Herstellung des Pfropfcopolymerisats (X) gewählten Bedingungen kann es möglich sein, daß bei der Pfropfcopolymerisation schon ein hinreichender Anteil an Komponente (Y) gebildet worden ist. Im allgemeinen ist es jedoch erforderlich, die bei der Pfropfcopolymerisation erhaltenen Produkte mit zusätzlicher, separat hergestellter Komponente (Y) abzumischen. Die Komponenten (X2) und (Y) brauchen in ihrer Zusammensetzung selbstverständlich nicht übereinzustimmen.

Bei dieser zusätzlichen, separat hergestellten Komponente (Y) handelt es sich vorzugsweise um ein Styrol/Acrylnitril-Copolymerisat, ein α-Methylstyrol/ Acrylnitril-Copolymerisat oder ein α-Methylstyrol/Styrol/Acrylnitril-Terpolymerisat. Diese Copolymerisate können einzeln oder auch als Gemisch für die Komponente (Y) eingesetzt werden, so daß es sich bei der zusätzlichen, separat hergestellten Komponente (Y) beispielsweise um ein Gemisch aus einem Styrol/Acrylnitril-Copolymerisat und einem α-Methylstyrol/Acrylnitril-Copolymerisat handeln kann. Für den Fall, daß die Komponente (Y) aus einem Gemisch aus einem Styrol/Acrylnitril-Copolymerisat und einem α-Methylstyrol/Acrylnitril-Copolymerisat besteht, sollten die Acrylnitrilgehalte der beiden Copolymerisate bevorzugt um nicht mehr als 10 Gew.-%, vorzugsweise nicht mehr als 5 Gew.-%, bezogen auf das Gesamtgewicht des Copolymerisats, voneinander abweichen. Die Komponente (Y) kann jedoch auch nur aus einem einzigen Copolymerisat aus vinylaromatischen Verbindungen und Vinylcyaniden bestehen, wenn sowohl bei den Pfropfcopolymerisationen zur Herstellung der Komponente (X) als auch bei der Herstellung der zusätzlichen, separat hergestellten Komponente (Y) von dem gleichen Monomergemisch ausgegangen wird.

Die zusätzliche, separat hergestellte Komponente (Y) kann nach den herkömmlichen Verfahren erhalten werden. So kann gemäß einer Ausführungsform der Erfindung die Copolymerisation von z.B. Styrol und/oder α-Methylstyrol mit Acrylnitril in Masse, Lösung, Suspension oder wäßriger Emulsion durchgeführt werden.

In einer bevorzugten Ausführungsform enthält die Substratschicht (1) bzw. (1') neben den Komponenten X und Y als zusätzliche Komponente Polycarbonate (Komponente Z) sowie gegebenenfalls weitere Zusatzstoffe, wie im folgenden beschrieben.

Geeignete Polycarbonate, worunter auch Copolycarbonate fallen, sind bereits vorstehend beschrieben worden.

Der Zusatz von Polycarbonaten führt unter anderem zu höherer Thermostabilität und verbesserter Rißbeständigkeit der Verbundschichtfolien.

Das Mischen der Komponenten (X) und (Y) sowie gegebenenfalls (Z) kann in jeder beliebigen Weise nach allen bekannten Methoden erfolgen. Wenn die Komponenten (X) und (Y) beispielsweise durch Emulsionspolymerisation hergestellt worden sind, ist es möglich, die erhaltenen Polymerdispersionen miteinander zu vermischen, daraufhin die Polymerisate gemeinsam auszufällen und das Polymerisatgemisch aufzuarbeiten. Vorzugsweise erfolgt jedoch das Abmischen der Komponenten (X) und (Y) durch gemeinsames Extrudieren, Kneten oder Verwalzen der Komponenten, bevorzugt bei Temperaturen im Bereich von 180 bis 400°C, wobei die Komponenten, sofern erforderlich, zuvor aus der bei der Polymerisation erhaltenen Lösung oder wäßrigen Dispersion isoliert worden sind. Die in wäßriger Dispersion erhaltenen Produkte der Pfropfcopolymerisation (Komponente X) können auch nur teilweise entwässert und als feuchte Krümel mit der Komponente (Y) vermischt werden, wobei dann während des Vermischens die vollständige Trocknung der Pfropfcopolymerisate erfolgt.

Es kann vorteilhaft sein, einzelne Komponenten vorzumischen. Auch das Mischen der Komponenten in Lösung und Entfernen der Lösungsmittel ist möglich. Bevorzugt sind organische Lösungsmittel, beispielsweise Chlorbenzol, Gemische aus Chlorbenzol und Methylenchlorid oder Gemische aus Chlorbenzol und aromatischen Kohlenwasserstoffen, z.B. Toluol. Das Eindampfen der Lösungsmittelgemische kann beispielsweise in Eindampfextrudern erfolgen. Die Komponenten können sowohl gemeinsam als auch getrennt und gegebenenfalls nacheinander eindosiert werden.

Die Substratschicht (1) bzw. (1') aus den Komponenten (X), (Y) und gegebenenfalls (Z) kann ferner als weitere Zusatzstoffe solche Verbindungen enthalten, die für die beschriebenen (Co)Polymerisate wie Polycarbonate, SAN-Polymerisate oder ASA-Polymerisate sowie deren Mischungen typisch und gebräuchlich sind. Als Zusatzstoffe seien beispielsweise genannt: Antistatika, Antioxidantien, optische Aufheller, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen.

Geeignete Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na und K).

Geeignete Stabilisatoren sind insbesondere die üblichen gehinderten Phenole, z.B. 2,6-disubstituierte Phenole wie 2,6-Di-tert.-butyl-4-methylphenol (BHT), 4-Methoxymethyl-2,6-di-tert.-butylphenol, 2,6-Di-tert.-butyl-4-hydroxymethylphenol, 2,2-Bis(4-hydroxyphenyl)propan, 4,4'-Dihydroxybiphenyl und 2,6-Dimethyl-4-methylphenol, wobei 2,6-Bis-(C₁-C₁₀-alkyl)-4-(C₁-C₁₀-alkyl)phenole bevorzugt sind. Geeignet sind auch Vitamin E und analog aufgebaute Verbindungen. Des weiteren sind auch die sogenannten HALS-Stabilisatoren (Hindered Amine Light Stabilizers), wie Tetraalkylpiperidin-N-oxyverbindungen, Benzophenone, Resorcine, Salicylate und Benzotriazole wie Tinuvin®P (2-(2H-Benzotriazol-2-yl)-4-methylphenol), geeignet. Diese werden üblicherweise in Mengen von bis zu 2 Gew.-%, bezogen auf das Gesamtgemisch, verwendet.

Geeignete Gleit- und Entformungsmittel sind z.B. Stearinsäuren, Stearylalkohol, Stearinsäureester bzw. allgemein höhere Fettsäuren, deren Derivate und entsprechende Fettsäuregemische mit 12 bis 30 Kohlenstoffatomen. Die Mengen dieser Zusätze liegen im Bereich von 0,05 bis 1 Gew.-%, bezogen auf das Gesamtgemisch.

Auch Siliconöle, oligomeres Isobutylen oder ähnliche Stoffe kommen als Zusatzstoffe in Frage. Die üblichen Mengen betragen 0,05 bis 5 Gew.-%, bezogen auf das Gesamtgemisch.

Verarbeitungshilfsmittel, z.B. Schmiermittel, und Stabilisatoren, wie UV-Stabilisatoren, sowie Antistatika werden üblicherweise zusammen in Mengen von 0,01 bis 5 Gew.-% eingesetzt.

Anstelle von ASA-Polymerisaten bzw. deren Blends mit Polycarbonaten oder auch zusätzlich zu diesen kann die Substratschicht (1) bzw. (1') auch ABS-Polymerisate (hierbei handelt es sich u.a. um schlagzähmodifizierte Styrol/Acrylnitril-Polymerisate, bei denen Pfropfcopolymerisate von Styrol und Acrylnitril auf Polybutadienkautschuken in einer Copolymermatrix aus Styrol und Acrylnitril vorliegen), Polyester wie Polybutylenterephthalat (PBT) oder Polyethylenterephthalat (PET), Polyamide, Polyetherimide (PEI), Polyetherketone (PEK), Polyphenylensulfide (PPS), Polyphenylenether oder Blends dieser Polymere enthalten. Die vorgenannten Polymerwerkstoffe sind im allgemeinen bekannt, beispielsweise aus H. Domininghaus, Die Kunststoffe und ihre Eigenschaften, VDI-Verlag, Düsseldorf (1992).

In einer bevorzugten Ausführungsform wird die Substratschicht (1) bzw. (1') aus einer Formmasse aus den Komponente (X), (Y) und gegebenenfalls (Z), aus ABS-Polymerisaten, Polycarbonaten, Polybutylenterephthalaten, Polyethylenterephthalaten, Polyamiden oder Blends der vorgenannten Formmassen gebildet. Besonders bevorzugt enthält die Substratschicht (1) eine Formmasse aus den Komponenten (X), (Y) und gegebenenfalls (Z) aus ABS, Polycarbonat oder Polybutylenterephthalat. Sie kann auch im wesentlichen oder vollständig aus diesen Polymeren bestehen.

Die Schichtdicke der Substratschicht (1) bzw. (1') beträgt vorzugsweise 100 bis 2 000 µm, insbesondere 150 bis 1 500 µm und besonders bevorzugt 200 bis 1 000 µm.

Für die Deckschicht (3) der Verbundschichtfolien wird üblicherweise auf Poly(meth)acrylatpolymerisate zurückgegriffen. Besonders geeignet sind Polymethylmethacrylate (PMMA) als Deckschichtmaterial, z.B. wie in der EP-A-255 500 beschrieben. PMMA mit mittleren Molekulargewichten im Bereich von 40 000 bis 100 000 g/mol ist bevorzugt. Geeignete PMMA-Formmassen sind z.B. Produkte, die unter der Handelsmarke Lucryl® (BASF AG) erhältlich sind.

Die Deckschicht (3) ist in der Regel transluzent, bevorzugt transparent. Anstelle von Poly(meth)acrylatpolymerisaten oder zusammen mit diesen können auch schlagzähe Poly(meth)acrylate, insbesondere schlagzähes Polymethylmethacrylat, Fluor(co)polymere, wie Polyvinylidenfluorid (PVDF), ABS-Polymerisate, Polycarbonate, Polyethylenterephthalat oder SAN-Copolymerisate, eingesetzt werden. Insbesondere enthält die Deckschicht Polymethylmethacrylat, schlagzähes Polymethylmethacrylat oder Polycarbonate, bevorzugt Polymethylmethacrylat, schlagzähes Polymethylmethacrylat, PVDF oder deren Mischungen. Die Polymere bzw. deren Mischungen werden in der Regel so gewählt, daß sie zu einer transparenten Deckschicht führen.

Geeignete Fluor(co)polymere werden aus olefinisch ungesättigten Monomeren bzw. Comonomeren gebildet, bei denen mindestens ein sp²-Kohlenstoffatom mit mindestens einem Fluoratom kovalent verknüpft ist. Unter diese (Co)Monomere fallen z.B. Chlortrifluorethen, Fluorvinylsulfonsäure, Hexafluorisobuten, Hexafluorpropen, Perfluorvinylmethylether, Tetrafluorethen, Vinylfluorid sowie insbesondere Vinylidenfluorid. Das gewichtsmittlere Molekulargewicht der Fluor(co)polymere liegt üblicherweise im Bereich von 50 000 bis 300 000, bevorzugt im Bereich von 100 000 bis 200 000 g/mol. Es können auch Mischungen aus Fluor(co)polymeren und Poly(meth)acrylaten eingesetzt werden. Bevorzugt sind Mischungen aus Polyvinylidenfluorid (PVDF) und Polymethylmethacrylat. Der Anteil an PVDF liegt in diesen Mischungen vorteilhafterweise im Bereich von 40 bis 80 Gew.-%, bevorzugt von 55 bis 75 Gew.-%, bezogen auf das Gesamtgewicht der Mischung.

Des weiteren kann sich eine Haftschicht aus bzw. enthaltend einen Haftvermittler mit einer Schichtdicke von 5 bis 400 µm an die äußere Fläche der Substratschicht (1) anschließen. Der Haftvermittler dient dazu, eine feste Verbindung mit einem gewählten Substrat herzustellen, das unter die Substratschicht zu liegen kommt (beispielsweise durch Hinterspritzen). Die Haftschicht wird dann verwendet, wenn die Haftung dieses weiteren Substrats mit der Substratschicht unzureichend ist (beispielsweise bei Polyolefinsubstraten). Geeignete Haftvermittler sind dem Fachmann bekannt. Beispiele für geeignete Haftvermittler sind Ethylen-Vinylacetat-Copolymere zur Kopplung an Polyethylen und Maleinsäureanhydrid-gepfropfte Polypropylene zur Kopplung an Polypropylen. In beiden Fällen wird nach gängiger Meinung die Haftung durch das Einbringen polarer Gruppen in die unpolaren Polyolefine erreicht.

Für die Zwischenschicht (2) der Verbundschichtfolie wird bevorzugt auf Kunststofformmassen aus einem oder mehreren thermoplastischen und/oder duroplastischen Kunststoffen, gegebenenfalls mit weiteren Zusatzstoffen und/oder Additiven, und einer erfindungsgemäßen Pigmentzubereitung, zurückgegriffen. Geeignete thermoplastische Kunststoffe sind z.B. die Polyalkyl- und/oder -arylester der (Meth)Acrylsäure, Poly(meth)acrylamide oder Poly(meth)acrylnitril, auch Acrylharze genannt,des weiteren Styrolpolymere wie ABS-Polymerisate, Styrol/Acrylnitril-Polymerisate (SAN) oder ASA-Polymerisate, Polycarbonate, Polyester, z.B. Polyethylen- oder Polybutylenterephthalat, Polyamide, insbesondere amorphes Polyamid, z.B. Polyamid 12, Polyethersulfone, Polysulfone oder Polyvinylchorid. Auch Blends der vorstehenden (Co)Polymerisate sind grundsätzlich geeignet, z.B. Mischungen aus ASA-Polymerisaten und Polycarbonaten, wie vorstehend für die Substratschicht (1) beschrieben. Geeignete duroplastische Kunststoffe stellen z.B. Polyurethane, also beispielsweise die sogenannten Polyesterschaumstoffe und insbesondere Polyetherschaumstoffe, dar. Diese Verbindungsklasse ist dm Fachmann hinlänglich bekannt und findet sich u.a. im Kunststoff-Handbuch, Band 7, Polyurethane, Hrsg. G. Oertel, 2. Aufl., Carl Hanser Verlag, München, 1983, insbesondere auf den Seiten 170-246 beschrieben. Bevorzugt wird auf Acrylharze und/oder Styrolpolymere zurückgegriffen.

Geeignete Acrylharze, Styrolpolymerisate, Polycarbonate, Polyester, Polyamide, Polyethersulfone, Polysulfone oder Vinylpolymere sowie Polyurethane finden sich vorgehend beschrieben.

Die Zwischenschicht (2) ist bevorzugt aus schlagzähem Polymethylmethacrylaten (PMMA), Polycarbonaten oder den vorstehend für die Substratschicht (1) beschriebenen ASA-Polymerisaten oder deren Blends mit Polycarbonaten aufgebaut.

Die in den erfindungsgemäßen Pigmentzubereitungen vorliegenden thermoplastischen Kunststoffe (B) können, müssen aber nicht mit den Formmassen, die die Zwischenschicht (2) bilden, übereinstimmen; allerdings sollten sie zumindest teilverträglich mit diesen sein, d.h. keine Entmischungsphänomene zeigen.

Die Schichtdicke der Zwischenschicht (2) liegt im allgemeinen im Bereich von 10 bis 1 000 µm, bevorzugt von 50 bis 500 µm und besonders bevorzugt von 100 bis 400 µm.

In einer weiteren Ausführungsform ist zusätzlich zur Zwischenschicht auch die Substratschicht mit einer erfindungsgemäßen Pigmentzubereitung eingefärbt. Des weiteren kann in einem Verbundsystem aus Substrat-, Zwischen- und Deckschicht auch nur die Substratschicht eingefärbt vorliegen.

Verbundschichtfolien aus einer Substratschicht (1), einer Zwischenschicht (2), einer Deckschicht (3) und gegebenenfalls einer Haftschicht (0) weisen üblicherweise die folgenden Schichtdicken auf:
Substratschicht (1): 100 bis 2 000 µm, bevorzugt 150 bis 1 500 µm und besonders bevorzugt 200 bis 1 000 µm,
Zwischenschicht (2): 10 bis 1 000 µm, bevorzugt 50 bis 500 µm, besonders bevorzugt 70 bis 400 µm und insbesondere 100 bis 300 µm, Deckschicht (3): 20 bis 300 µm, bevorzugt 50 bis 200 µm und besonders bevorzugt 50 bis 100 µm sowie
Haftschicht (0): 5 bis 400 µm, bevorzugt 10 bis 200 µm und besonders bevorzugt 50 bis 100 µm.

Die Gesamtdicke dieser Verbundschichtfolie beträgt üblicherweise 150 bis 2 000 µm, bevorzugt 250 bis 1 500 µm und besonders bevorzugt 200 bis 1 000 µm.

Verbundschichtfolien aus einer farbgebenden Substratschicht (1'), einer Deckschicht (3) und gegebenenfalls einer Haftschicht (0) weisen üblicherweise die folgenden Schichtdicken auf:
Substratschicht (1'): 100 bis 2 000 µm, bevorzugt 150 bis 1 500 µm und besonders bevorzugt 200 bis 1 000 µm,
Deckschicht (3): 20 bis 300 µm, bevorzugt 50 bis 200 µm und besonders bevorzugt 50 bis 100 µm sowie
Haftschicht (0): 5 bis 400 µm, bevorzugt 10 bis 200 µm und besonders bevorzugt 50 bis 100 µm.

Die Gesamtdicke dieser Verbundschichtfolie beträgt üblicherweise 120 bis 2 000 µm, bevorzugt 250 bis 1 500 µm und besonders bevorzugt 200 bis 1 000 µm.

Die Herstellung der erfindungsgemäßen Verbundschichtfolien kann in einem einstufigen Prozeß durch Coextrusion der die einzelnen Schichten bildenden Kunststoffe und Zusatzstoffe erfolgen, wobei sowohl Adapter- als auch Düsencoextrusionsverfahren geeignet sind. Die Komponenten jeder Schicht werden dabei in einem eigenen Extruder homogenisiert und fließfähig gemacht, und die Schmelzströme werden dann über spezielle Vorrichtungen (z.B. in einem Feedblock) in der für das Verbundschichtsystem gewünschten Schichtabfolge aufeinandergelegt und durch eine Breitschlitzdüse coextrudiert. Weitere Einzelheiten sind in der EP-A-847 852 und der nicht vorveröffentlichten DE-A-199 28 774 sowie der dort genannten Literatur beschrieben.

Selbstverständlich können die Verbundschichtfolien auch so hergestellt werden, indem die einzelnen Schichten getrennt extrudiert werden und anschließend durch Kaschieren zu einer Verbundschichtfolie zusammengefügt werden. Die erfindungsgemäßen Verbundschichtfolien können vorteilhaft zur Herstellung der ebenfalls erfindungsgemäßen Kunststofformteile verwendet werden, indem sie von der Substratschicht (1) bzw. (1') bzw. der Haftschicht (0) aus nach bekannten Verfahren mit dem Kunststofformmaterial hinterprägt, hinterspritzt, hintergossen oder hinterschäumt werden.

Dabei können die erfindungsgemäßen Verbundschichtfolien durch Thermoformen vorgeformt bzw. verstreckt werden, wobei die dem Fachmann bekannten Positiv- und Negativ-Thermoformverfahren eingesetzt werden können. Da der Glanz bzw. die Oberflächenqualität der erfindungsgemäßen Verbundschichtfolien bei hohen Verstrekkungsverhältnissen, beispielsweise bis zu 1:5, nicht mit der Verstreckung abnimmt, sind die Thermoformverfahren nahezu keinen für die Praxis relevanten Beschränkungen in bezug auf die mögliche Verstreckung ausgesetzt.

Die Herstellung von hinterspritzten Kunststofformteilen umfaßt dementsprechend vorzugsweise die folgenden Schritte:
a1) Herstellen der Verbundschichtfolie mittels Adapter- oder Düsencoextrusion von Substratschicht, gegebenenfalls Zwischenschicht sowie Deckschicht in einem einstufigen Prozeß oder
a2) Herstellen der Einzelfolien über Extrusion oder Kalandrierung und anschließend deren Laminierung zu der Verbundschichtfolie,
b) gegebenenfalls Thermoformen der in Schritt a) erhaltenen Verbundschichtfolie in einem Formwerkzeug und
c) Hinterspritzen der Verbundschichtfolie mit einem vorzugsweise faserverstärkten Kunststoffmaterial.

Bevorzugte Kunststoffmaterialien sind hierbei thermoplastische Formmassen auf der Basis von ASA- oder ABS-Polymerisaten, SAN-Polymerisaten, Polyethersulfonen, Polybutylenterephthalat, Polypropylen (PP) oder Polyethylen (PE) sowie Blends aus ASA-Polymerisaten mit Polycarbonaten oder ASA-Polymerisaten mit Polybutylenterephthalat sowie Blends aus Polycarbonaten mit Polybutylenterephthalat eingesetzt, wobei es sich bei Verwendung von PE und/oder PP anbietet, die Substratschicht (1) zuvor mit einer Haftschicht (0) zu versehen. Besonders bevorzugt sind amorphe Thermoplasten bzw. deren Blends. Ganz besonders bevorzugt sind ABS-Polymerisate.

Aufgrund seiner Dämpfungseigenschaften ist faserverstärktes Polyurethan (Halbhartschaumsysteme) ebenfalls als Kunststoffmaterial geeignet.

Die Kunststoffmaterialien weisen vorzugsweise Fasern in einer Menge von 5 bis 30 Gew.-%, bevorzugt 7 bis 25 Gew.-%, insbesondere 10 bis 20 Gew.-% auf. Als Fasern kommen Naturfasern wie Flachs, Hanf, Jute, Sisal, Ramie oder Carnaf zum Einsatz. Bevorzugt sind Kohlenstoff- und Glasfasern.

Die verwendeten Glasfasern können aus E-, A- oder C-Glas sein und sind vorzugsweise mit einer Schlichte und einem Haftvermittler ausgerüstet. Ihr Durchmesser liegt im allgemeinen bei 6 bis 20 µm. Es können sowohl Endlosfasern (rovings) als auch Schnittglasfasern (staple) mit einer Länge von 1 bis 15 mm, vorzugsweise 5 bis 10 mm, eingesetzt werden. Geeignete Schlichten setzen sich z.B. zusammen aus ungesättigten Polyesterharzen, sind dem Fachmann im übrigen bekannt und können auch kommerziell erhalten werden (z.B. Cratec® (OCF)).

Die erfindungsgemäßen Kunststofformteile können im Kraftfahrzeugbereich, insbesondere als Kraftfahrzeugkarosserieinnen- und/oder -außenteile zum Einsatz kommen, z.B. als kleinere Kraftfahrzeugkarosserieaußenteile, wie Spiegel oder Verblendungen, oder als großflächige Karosserieaußenteile wie Kotflügel, Hauben, Abdekkungen, Spoiler, Türen, Stoßstangen oder Stoßfänger, des weiteren als Gehäuse von Haushalts- und Elektrogeräten, als Batterieträger, Fassadenverkleidungen, Fußbodenbeläge, Handy-Gehäuse oder Sitzschalen.

Die erfindungsgemäßen Verbundschichtfolien bzw. die mittels Hinterspritzen, Hinterprägen, Hinterschäumen oder Hintergießen daraus erhaltenen Kunststofformteile zeichnen sich durch einen sehr hohen, seidigen Glanz aus der Tiefe aus. Sie sind insbesondere im Bewitterungstest hinsichtlich Bewitterungsstabilität und Farbkonstanz konventionell eingefärbten Kunststoffverbundsystemen überlegen und im Vergleich mit herkömmlichen Metallackierungen mindestens gleichwertig. Außerdem läßt sich die Farbe dieser Formteile unproblematisch mit der Farbe lackierter Metallflächen in Übereinstimmung bringen, so daß ein Einsatz in der Serienproduktion möglich ist.

### Beispiele

### A) Herstellung von erfindungsgemäßen Pigmentzubereitungen

### Beispiel 1

Eine Mischung von 60 g eines handelsüblichen Polymethylmethacrylats (Lucryl KR 2006/1, BASF), 30 g des Farbpigments C.I. Pigment Blue 15:4 (mittlerer Teilchendurchmesser 0,05 bis 0,2 µm), 180 g Aceton und 550 g Zirkondioxidperlen (SAZ, Durchmesser 1 bis 1,6 mm) wurde 4 h in einem verschlossenen 500 ml-Glasgefäß in einer Skandex-Schüttelmaschine geschüttelt.

Die erhaltene Farbpigmentdispersion wurde nach Abtrennung der Mahlkörper in eine mit einem Flügelrührer gerührte Lösung von 240 g des gleichen PMMA in 1 l Aceton gegeben. Dann wurden 70 g eines Glanzpigments auf Basis SiO₂- und Fe₂O₃-beschichteter Aluminiumplättchen (mittlerer Teilchendurchmesser (D₅₀) 17 µm; Variocrom Magic Gold L 1400; BASF) zugegeben und in etwa 15 min bei niedriger Umdrehungszahl schonend in der Farbpigmentdispersion dispergiert.

Die erhaltene Pigmentdispersion wurde anschließend in einem Wirbelschichttrockner (Durchmesser des Wirbelbodens 150 mm, zylindrische Höhe 500 mm) auf 1,6 kg PMMA-Stranggranulat (Länge etwa 3 mm, Dicke 1 bis 3 mm, mittleres Gewicht pro Granulatteilchen 0,015 g), das mit 70 m³/h auf 70°C erhitzter Luft fluidisiert wurde, in 2 h (0,7 kg/h) aufgedüst.

Es wurden 1997 g einer Pigmentzubereitung in PMMA mit einem Gehalt von 3,5 Gew.-% Glanzpigment und 1,5 Gew.-% Farbpigment in Form eines rieselfähigen, abriebfesten Granulats mit einem Durchmesser von 2 bis 4 mm erhalten.

### Beispiel 2

Es wurde analog Beispiel 1 vorgegangen, jedoch wurden als Farbpigment 30 g C.I. Pigment Red 179 (mittlerer Teilchendurchmesser 0,01 bis 0,1 µm) und als Glanzpigment 70 g Aluminiumplättchen (mittlerer Teilchendurchmesser 10 bis 12 µm; Stapa Hydrolux® 2192; Eckart) eingesetzt.

Es wurden 1993 g einer Pigmentzubereitung in PMMA mit einem Gehalt von 3,5 Gew.-% Glanzpigment und 1,5 Gew.-% Farbpigment in Form eines rieselfähigen, abriebfesten Granulats mit einem Durchmesser von 2 bis 4 mm erhalten.

### Beispiel 3

Es wurde analog Beispiel 1 vorgegangen, jedoch wurden als Glanzpigment 70 g der Aluminiumplättchen aus Beispiel 2 eingesetzt.

Es wurden 1998 g einer Pigmentzubereitung in PMMA mit einem Gehalt von 3,5 Gew.-% Glanzpigment und 1,5 Gew.-% Farbpigment in Form eines rieselfähigen, abriebfesten Granulats mit einem Durchmesser von 2 bis 4 mm erhalten.

### Beispiel 4

Es wurde analog Beispiel 1 vorgegangen, jedoch wurden als Farbpigment 30 g C.I. Pigment Blue 60 (mittlerer Teilchendurchmesser 0,1 bis 0,5 µm) und als Glanzpigment 70 g TiO₂-beschichtete Glimmerplättchen (mittlerer Teilchendurchmesser 10 bis 60 µm; Iriodin 100 Silberperl; Merck) eingesetzt.

Es wurden 1995 g einer Pigmentzubereitung in PMMA mit einem Gehalt von 3,5 Gew.-% Glanzpigment und 1,5 Gew.-% Farbpigment in Form eines rieselfähigen, abriebfesten Granulats mit einem Durchmesser von 2 bis 4 mm erhalten.

### Beispiel 5

Eine Mischung von 120 g eines handelsüblichen Acrylnitril-Styrol-Acrylester-Copolymers (ASA; Luran S; BASF), 59,9 g des Farbpigments C.I. Pigment Red 179 aus Beispiel 4, 0,1 g C.I. Pigment Black (Printex® 60; Degussa), 360 g Aceton und 1,1 kg Zirkondioxidperlen (SAZ, Durchmesser 1 bis 1,6 mm) wurde 4 h in einem verschlossenen 1 l-Glasgefäß in einer Skandex-Schüttelmaschine geschüttelt.

Die erhaltene Farbpigmentdispersion wurde nach Abtennung der Mahlkörper in eine mit einem Flügelrührer gerührte Lösung von 180 g des gleichen ASA-Copolymers in 800 g Aceton gegeben. Dann wurden 40 g des Glanzpigments auf Basis TiO₂-beschichteter Glimmerplättchen aus Beispiel 4 zugegeben und in etwa 15 min bei niedriger Umdrehungszahl schonend in der Farbpigmentdispersion dispergiert.

Die erhaltene Pigmentdispersion wurde anschließend analog Beispiel 1 auf 1,6 kg des PMMA-Granulats aus Beispiel 1 gesprüht.

Es wurden 1996 g einer Pigmentzubereitung mit einem Gehalt von 2 Gew.-% Glanzpigment und 3 Gew.-% Farbpigment in Form eines rieselfähigen, abriebfesten Granulats mit einem Durchmesser von 2 bis 4 mm erhalten.

### B) Anwendung von erfindungsgemäßen Pigmentzubereitungen

### Beispiel 6

Es wurden Verbundschichtfolien folgenden Aufbaus hergestellt:
(1) Substratschicht: 600 µm dicke Schicht aus einem handelsüblichem Acrylnitril-Styrol-Acrylester-Copolymer (ASA; Luran S; BASF)
(2) Farbgebende Zwischenschicht: 200 µm dicke Schicht aus einem handelsüblichen Polymethylmethacrylat (PMMA; Lucryl; BASF), jeweils 2%ig mit den Pigmentzubereitungen aus den Beispielen 1 bis 3 pigmentiert
(3) Deckschicht: 50 µm dicke Schicht aus einem handelsüblichen Polymethylmethacrylat (PMMA; Lucryl; BASF)

Die Komponenten der einzelnen Schichten (1) bis (3) wurden jeweils in einem separaten Einschneckenextruder bei 250 bis 260°C aufgeschmolzen und homogenisiert. Die Schmelzströme wurden in einem Feedblock vor dem Eintritt in die Breitschlitzdüse aufeinandergelegt und als Schichtverbund auf die Düsenbreite (1,2 m) verstreckt.

Es wurden sehr brillante Verbundschichtfolien mit sehr guten Tiefzieheigenschaften erhalten. Der koloristische Eindruck dieser Folien war mit dem entsprechender Lackierungen vergleichbar. Die CIELAB-Werte Hue (Farbwinkel in °), C* (Chroma) und L (Helligkeit) der mit den Pigmentzubereitungen aus den Beispielen 1 bis 3 eingefärbten Folien wurden mit einem Gonio-Spektralphotometer Multiflash (Fa. Optronik) bei einer Winkeldifferenz von 25°, 45°, 70° bzw. 110° zum Glanzwinkel unter Verwendung der Normlichtart D65 gemessen und sind in Tabelle 1 zusammengestellt.

### Beispiel 7

Es wurden Verbundschichtfolien folgenden Aufbaus hergestellt:
(1') Pigmentierte Substratschicht: 900 µm dicke Schicht aus dem Acrylnitril-Styrol-Acrylester-Copolymer aus Beispiel 6, 2%ig mit der Pigmentzubereitung aus Beispiel 5 pigmentiert
(3) Deckschicht: 50 µm dicke Schicht, zusammengesetzt wie Schicht (3) in Beispiel 6

Die Herstellung des Verbundschichtfolie erfolgte analog Beispiel 6.

Es wurde eine sehr brillante, wolkenfreie Verbundschichtfolie mit sehr guten Tiefzieheigenschaften erhalten. Der koloristische Eindruck dieser Folie war mit dem einer entsprechenden Lackierung vergleichbar. Insbesondere blieb der für eine Lackierung mit Glanzpigmenten auf transparenter Substratbasis charakteristische seidige Glanz aus der Tiefe ("Mica-Effekt") unverändert erhalten.

Zum Vergleich (V) wurde eine Verbundschichtfolie hergestellt, deren pigmentierte Substratschicht (1') unter Verwendung eines auf herkömmliche Weise nach dem Coldfeed-Verfahren in einem Doppelschneckenextruder hergestellten Konzentrats aus den in Beispiel 5 verwendeten Pigmenten eingefärbt wurde (ebenfalls 2%ige Pigmentierung) .

Die hierbei erhaltene Verbundschichtfolie war farbschwächer, heller und wesentlich weniger brillant. Insbesondere war der Mica-Effekt aufgrund der Schädigung des Glanzpigments bei der Einarbeitung in den Kunststoff nicht mehr zu beobachten.

Die CIELAB-Werte beider Verbundschichtfolien wurden analog Beispiel 6 gemessen und sind ebenfalls in Tabelle 1 zusammengestellt.

Zusätzlich wurde die Bewitterungsstabilität der in Beispiel 7 hergestellten Verbundschichtfolie sowie zum Vergleich rot pigmentierter Lackierungen (Reparaturlack VL1 und OEM-Lack VL2) nach ISO 4892-2A geprüft. In Tabelle 2 sind die nach 500 h und 1000 h Bewitterung erhaltenen Ergebnisse der Farbmessung nach DIN 53236 (45/0° und diffus 8°; Angabe als Farbabweichung Gesamt-dE, bezogen auf die Farbmessung vor Beginn der Bewitterung) sowie der Glanzmessung nach DIN 67530 (20°) aufgeführt.

Die Verbundschichtfolie zeigte bei der Messung diffus 8° eine mit den Lackierungen vergleichbare Farbabweichung. Bei der Messung 45/0° war die Farbabweichung der Verbundschichtfolie jedoch deutlich geringer. Der Glanz der Verbundschichtfolie veränderte sich nicht, der Glanz der Lackierungen nahm jedoch deutlich ab.

**Tabelle 1**

| Pigmentzuber. aus Bsp. | Hue [°] | C* | L | Hue [°] | C* | L | Hue [°] | C* | L | Hue [°] | C* | L |
|---|---|---|---|---|---|---|---|---|---|---|---|---|
| | Meßwinkel 25° | | | Meßwinkel 45° | | | Meßwinkel 70° | | | Meßwinkel 110° | | |
| | | | | | | | | | | | | |
| 1 | 299,8 | 18,9 | 50,4 | 278,3 | 18,3 | 24,0 | 260,4 | 14,1 | 17,7 | 243,2 | 13,3 | 14,5 |
| 2 | 19,5 | 30,3 | 53,3 | 27,8 | 26,2 | 32,6 | 34,6 | 25,7 | 23,7 | 38,8 | 26,8 | 19,9 |
| 3 | 225,6 | 38,9 | 59,6 | 240,4 | 30,0 | 33,3 | 254,2 | 23,1 | 22,7 | 262,0 | 22,5 | 18,3 |
| 5 | 27,2 | 46,8 | 28,4 | 28,5 | 42,4 | 22,3 | 28,7 | 39,4 | 20,1 | 30,1 | 40,5 | 19,8 |
| V | 23,9 | 38,4 | 33,1 | 24,9 | 36,7 | 29,8 | 24,6 | 36,1 | 26,8 | 25,9 | 37,9 | 24,5 |

**Tabelle 2**

| | Gesamt-dE (45/0°) | | Gesamt-dE (diff. 8°) | | Glanz | | |
|---|---|---|---|---|---|---|---|
| | 500 h | 1000 h | 500 h | 1000 h | 0 h | 500 h | 1000 h |
| Folie aus Bsp.7 | 0,2 | 0,7 | 0,6 | 0,6 | 78 | 78 | 78 |
| VL1 | 2,8 | 2,6 | 0,2 | 0,6 | 72 | 70 | 65 |
| VL2 | 1,9 | 2,4 | 0,7 | 0,8 | 80 | 64 | 66 |

## Patentansprüche

1. Pigmentzubereitungen in Granulatform, erhältlich durch
a) Dispergierung mindestens zwei voneinander verschiedener Pigmente (A) in einer Lösung eines thermoplastischen Polymeren (B) in einem organischen Lösungsmittel in An- oder Abwesenheit eines Dispergiermittels (C) und
b) Aufbringung der in Schritt a) erzeugten Dispersion als Schicht auf ein Granulat aus einem thermoplastischen Polymer (B'), das dem Polymer (B) entspricht oder von diesem verschieden ist, unter Entfernung des Lösungsmittels.

2. Pigmentzubereitungen nach Anspruch 1, die als Komponente (A) mindestens zwei Pigmente aus der Gruppe der organischen und anorganischen Bunt-, Weiß- und Schwarzpigmente, der Glanzpigmente und der Flüssigkristallpigmente enthalten.

3. Pigmentzubereitungen nach Anspruch 1 oder 2, die als Komponente (A) mindestens ein Glanzpigment und mindestens ein transparentes Bunt- oder Schwarzpigment enthalten.

4. Pigmentzubereitungen nach den Ansprüchen 1 bis 3, die als Komponente (B) und (B') ein oder mehrere thermoplastische Polymere aus der Gruppe der Acrylharze, Styrolpolymere, Vinylpolymere, Polycarbonate, Polyamide, Polyester und thermoplastischen Polyurethane enthalten.

5. Pigmentzubereitungen nach den Ansprüchen 1 bis 4, die 0,1 bis 40 Gew.-% der Komponente (A), 60 bis 99,9 Gew.-% der Komponente (B) und (B') und 0 bis 8 Gew.-% der Komponente (C) enthalten.

6. Verfahren zur Herstellung von Pigmentzubereitungen gemäß den Ansprüchen 1 bis 5, **dadurch gekennzeichnet, daß** man
a) die Pigmente (A) in einer Lösung des Polymeren (B) in einem organischen Lösungsmittel in An- oder Abwesenheit eines Dispergiermittels (C) dispergiert und
b) die in Schritt a) erzeugte Dispersion unter Entfernung des Lösungsmittels als Schicht auf ein Granulat aus dem Polymer (B') aufbringt.

7. Verfahren nach Anspruch 6, **dadurch gekennzeichnet, daß** man die Pigmente (A), gegebenenfalls unter Verwendung unterschiedlicher Dispergiermethoden, nacheinander in der Lösung des Polymeren (B) dispergiert.

8. Verfahren zur Einfärbung von Kunststofformmassen, **dadurch gekennzeichnet, daß** man die Pigmentzubereitungen gemäß den Ansprüchen 1 bis 5 in die Kunststofformmassen einarbeitet.

9. Verfahren nach Anspruch 8, **dadurch gekennzeichnet, daß** man es zur Einfärbung von Folien, Platten, Profilen, Formteilen, Spritzgußteilen oder Fasern einsetzt.

10. Verfahren nach Anspruch 8, **dadurch gekennzeichnet, daß** man es zur Einfärbung der farbgebenden Schicht von Verbundschichtplatten und -folien einsetzt.

11. Kunststofformmassen, eingefärbt mit den Pigmentzubereitungen gemäß den Ansprüchen 1 bis 5.

12. Kunststofformmassen nach Anspruch 11, die auf Kunststoffen aus Acrylharzen, Styrolpolymerisaten, Polycarbonaten, Polyestern, Polyamiden, Polyethersulfonen, Polysulfonen, Polyvinylchlorid, Polyetherimiden, Polyetherketonen, Polyphenylensulfiden, Polyphenylenethern oder deren Mischungen, die jeweils gegebenenfalls Zusatzstoffe enthalten, basieren.

13. Verbundschichtfolien, enthaltend mindestens eine farbgebende Schicht, die mit den Pigmentzubereitungen gemäß den Ansprüchen 1 bis 5 eingefärbt ist.

14. Verbundschichtfolien nach Anspruch 13, die im wesentlichen in dieser Reihenfolge umfassen:
(1) mindestens eine Substratschicht (1), enthaltend ASA-Polymerisate, ABS-Polymerisate, Polycarbonate, Polyester, Polyamide, Polyetherimide, Polyetherketone, Polyphenylensulfide, Polyphenylenether oder Mischungen dieser Polymere, gewünschtenfalls eingefärbt mit den Pigmentzubereitungen gemäß den Ansprüchen 1 bis 5,
(2) mindestens eine farbgebende Zwischenschicht (2), enthaltend Kunststofformmassen aus Acrylharzen, Styrolpolymeren, Polycarbonaten, Polyestern, Polyamiden, Polyethersulfonen, Polysulfonen, Polyvinylchorid, Polyurethanen oder deren Mischungen, eingefärbt mit den Pigmentzubereitungen gemäß den Ansprüchen 1 bis 5, und
(3) mindestens eine transluzente oder transparente Deckschicht (3), enthaltend Poly(meth)acrylate, schlagzähe Poly(meth)acrylate, Fluor(co)polymere, ABS-Polymerisate, Polycarbonate, Polyethylenterephthalat, SAN-Copolymerisate oder deren Mischungen.

15. Verbundschichtfolien nach Anspruch 13, die im wesentlichen in dieser Reihenfolge umfassen:
(1) mindestens eine farbgebende Substratschicht (1'), enthaltend ASA-Polymerisate, ABS-Polymerisate, Polycarbonate, Polyester, Polyamide, Polyetherimide, Polyetherketone, Polyphenylensulfide, Polyphenylenether oder deren Mischungen, eingefärbt mit den Pigmentzubereitungen gemäß den Ansprüchen 1 bis 5, und
(2) mindestens eine transluzente oder transparente Deckschicht (3), enthaltend Poly(meth)acrylate, schlagzähe Poly(meth)acrylate, Fluor (co) polymere, ABS-Polymerisate, Polycarbonate, Polyethylenterephthalat, SAN-Copolymerisate oder deren Mischungen.

16. Verbundschichtfolien nach Anspruch 14 oder 15, die eine aus ASA-Polymerisaten oder aus einem Blend aus ASA-Polymerisaten und Polycarbonaten aufgebaute Substratschicht enthalten.

17. Kunststofformteile, im wesentlichen enthaltend eine Verbundschichtfolie gemäß den Ansprüchen 14 bis 16, die mindestens eine Fläche des Kunststofformteils begrenzt und dabei über die Substratschicht mit dem hinterprägten, hinterspritzten, hintergossenen oder hinterschäumten Kunststofformmaterial verbunden ist.

18. Kunststofformteile nach Anspruch 17, bei denen es sich um Karosserieinnen- und/oder -außenteile, Gehäuse von Haushalts- und/oder Elektrogeräten, Batterieträger, Sitzschalen, Fassadenverkleidungen, Handygehäuse oder Fußbodenbeläge handelt.

## Claims

1. Pigment formulations in granule form obtainable by
a) dispersing at least two different pigments (A) in a solution of a thermoplastic polymer (B) in an organic solvent in the presence or absence of a dispersant (C), and
b) applying as a layer the dispersion produced in step a) to granules of a thermoplastic polymer (B'), which corresponds to polymer (B) or is different therefrom, with removal of the solvent.

2. Pigment formulations according to Claim 1, comprising as component (A) at least two pigments from the group consisting of organic and inorganic chromatic, white and black pigments, luster pigments and liquid-crystal pigments.

3. Pigment formulations according to Claim 1 or 2, comprising as component (A) at least one luster pigment and at least one transparent chromatic or black pigment.

4. Pigment formulations according to any of Claims 1 to 3, comprising as component (B) and (B') one or more thermoplastic polymers from the group consisting of acrylic resins, styrene polymers, vinyl polymers, polycarbonates, polyamides, polyesters, and thermoplastic polyurethanes.

5. Pigment formulations according to any of claims 1 to 4, containing from 0.1 to 40% by weight of component (A), from 60 to 99.9% by weight of component (B) and (B'), and from 0 to 8% by weight of component (C).

6. Process for preparing pigment formulations according to any of Claims 1 to 5, **characterized in that**
a) the pigments (A) are dispersed in a solution of the polymer (B) in an organic solvent in the presence or absence of a dispersant (C), and
b) the dispersion produced in step a) is applyed as a layer, with removal of the solvent, to granules of a thermoplastic polymer (B').

7. Process according to Claim 6, **characterized in that** the pigments (A) are dispersed in succession in the solution of the polymer (B), using different dispersing methods if desired.

8. Process for coloring polymer molding compounds, **characterized in that** the pigment formulations according to any of Claims 1 to 5 are incorporated into the polymer molding compounds.

9. Process according to Claim 8, **characterized in that** it is used to color films, sheets, profiles, shaped parts, including injection moldings, or fibers.

10. Process according to Claim 8, **characterized in that** it is used to color the coloring layer of composite sheets and films.

11. Polymer molding compounds colored with the pigment formulations according to any of Claims 1 to 5.

12. Polymer molding compounds according to Claim 11, based on polymers comprising acrylic resins, styrene polymers, polycarbonates, polyesters, polyamides, polyethersulfones, polysulfones, polyvinyl chloride, polyetherimides, polyetherketones, polyphenylene sulfides, polyphenylene ethers or blends thereof, each of which may comprise additives.

13. Composite films comprising at least one coloring layer colored with the pigment formulations according to any of Claims 1 to 5.

14. Composite films according to Claim 13, comprising substantially in this order:
(1) at least one substrate layer (1) comprising ASA polymers, ABS polymers, polycarbonates, polyesters, polyamides, polyether imides, polyether ketones, polyphenylene sulfides, polyphenylene ethers or blends thereof, colored if desired with the pigment formulations according to any of Claims 1 to 5,
(2) at least one coloring interlayer (2) comprising polymer molding compounds of acrylic resins, styrene polymers, polycarbonates, polyesters, polyamides, polyether sulfones, polysulfones, polyvinyl chloride, polyurethanes or blends thereof, colored with the pigment formulations according to any of Claims 1 to 5, and
(3) at least one translucent or transparent top layer (3) comprising poly(meth)acrylates, high impact poly (meth) acrylates, fluorine (co)polymers, ABS polymers, polycarbonates, polyethylene terephthalate, SAN copolymers or blends thereof.

15. Composite films according to Claim 13, comprising substantially in this order:
(1) at least one coloring substrate layer (1') comprising ASA polymers, ABS polymers, polycarbonates, polyesters, polyamides, polyether imides, polyether ketones, polyphenylene sulfides, polyphenylene ethers or blends thereof, colored with the pigment formulations according to any of Claims 1 to 5, and
(2) at least one translucent or transparent top layer (3) comprising poly(meth)acrylates, high impact poly(meth)acrylates, fluorine (co)polymers, ABS polymers, polycarbonates, polyethylene terephthalate, SAN copolymers or blends thereof.

16. Composite films according to Claim 14 or 15, comprising a substrate layer composed of ASA polymers or of a blend of ASA polymers and polycarbonates.

17. Shaped plastic parts, substantially comprising a composite film according to any of Claims 14 to 16 which limits at least one surface of the shaped plastic part and is connected by way of the substrate layer to the back-embossed, injection-backmolded, back-cast or foam-backed polymer molding material.

18. Shaped plastic parts according to Claim 17, comprising an interior and/or exterior bodywork part, a domestic and/or electrical appliance casing, a battery support, a seat shell, a façade panel, a mobile-telephone casing or a floor covering.

## Revendications

1. Préparations pigmentaires sous forme de granulés, pouvant être obtenues
a) par dispersion d'au moins deux pigments (A) différents l'un de l'autre, dans une solution d'un polymère thermoplastique (B) dans un solvant organique, en l'absence ou en présence d'un dispersant (C), et
b) par application de la dispersion obtenue dans l'étape a), sous forme d'une couche, sur un granulé constitué d'un polymère thermoplastique (B'), qui correspond au polymère (B) ou qui en est différent, avec élimination du solvant.

2. Préparations pigmentaires selon la revendication 1, qui en tant que composant (A) contiennent au moins deux pigments du groupe des pigments colorés, des pigments blancs et des pigments noirs, organiques et inorganiques, des pigments brillants et des pigments de cristaux liquides.

3. Préparations pigmentaires selon la revendication 1 ou 2, qui en tant que composant (A) contiennent au moins un pigment brillant et au moins un pigment coloré ou noir transparent.

4. Préparations pigmentaires selon les revendications 1 à 3, qui en tant que composant (B) et (B') contiennent un ou plusieurs polymères thermoplastiques du groupe des résines acryliques, des polymères styréniques, des polymères vinyliques, des polycarbonates, des polyamides, des polyesters et des polyuréthannes thermoplastiques.

5. Préparations pigmentaires selon les revendications 1 à 4, qui contiennent 0,1 à 40 % en poids du composant (A), 60 à 99,9 % en poids des composants (B) et (B'), et 0 à 8 % en poids du composant (C).

6. Procédé de fabrication de préparations pigmentaires selon les revendications 1 à 5, **caractérisé en ce que**
a) on disperse les pigments (A) dans une solution du polymère (B) dans un solvant organique en présence ou en l'absence d'un dispersant (C), et
b) on applique la dispersion obtenue dans l'étape a), tout en éliminant le solvant, sous forme d'une couche sur un granulé constitué du polymère (B').

7. Procédé selon la revendication 6, **caractérisé en ce qu'**on disperse l'un après l'autre dans la solution du polymère (B) les pigments (A), éventuellement par utilisation de techniques différentes de dispersion.

8. Procédé de coloration dans la masse de mélanges à mouler plastiques, **caractérisé en ce qu'**on incorpore dans les mélanges à mouler de matières plastiques les préparations pigmentaires selon les revendications 1 à 5.

9. Procédé selon la revendication 8, **caractérisé en ce qu'**on l'utilise pour colorer dans la masse des feuilles, des plaques, des profilés, des objets moulés, des pièces moulées par injection ou des fibres.

10. Procédé selon la revendication 8, **caractérisé en ce qu'**on l'utilise pour colorer dans la masse la couche colorante de plaques et feuilles stratifiées.

11. Mélanges à mouler de matières plastiques, colorés dans la masse par les préparations pigmentaires selon les revendications 1 à 5.

12. Mélanges à mouler de matières plastiques selon la revendication 11, qui se fondent sur des matières plastiques constituées de résines acryliques, de polymères styréniques, de polycarbonates, de polyesters, de polyamides, de polyéthersulfones, de polysulfones, de poly(chlorure de vinyle), de polyétherimides, de polyéthercétones, de poly(sulfures de phénylène), de polyphénylène-éthers ou de leurs mélanges, qui chacun contient éventuellement des additifs.

13. Feuilles stratifiées contenant au moins une couche colorante qui a été colorée dans la masse par les préparations pigmentaires selon les revendications 1 à 5.

14. Feuilles stratifiées selon la revendication 13, qui pour l'essentiel comprennent, dans l'ordre indiqué :
(1) au moins une couche formant substrat (1), contenant des polymères ASA, des polymères ABS, des polycarbonates, des polyesters, des polyamides, des polyétherimides, des polyéthercétones, des poly(sulfures de phénylène), des polyphénylène-éthers ou des mélanges de ces polymères, si on le souhaite colorés dans la masse par les préparations pigmentaires selon les revendications 1 à 5,
(2) au moins une couche intermédiaire colorante (2) contenant des mélanges à mouler de matières plastiques constitués de résines acryliques, de polymères styréniques, de polycarbonates, de polyesters, de polyamides, de polyéthersulfones, de polysulfones, de poly(chlorure de vinyle), de polyuréthannes ou de leurs mélanges, colorés dans la masse par les préparations pigmentaires selon les revendications 1 à 5, et
(3) au moins une couche de couverture translucide ou transparente (3) contenant des poly((méth)acrylates), des poly((méth)acrylates) résistant au choc, des fluoro(co)polymères, des polymères ABS, des polycarbonates, du poly(téréphtalate d'éthylène), des copolymères SAN ou leurs mélanges.

15. Feuilles stratifiées selon la revendication 13, qui pour l'essentiel comprennent, dans cet ordre :
(1) au moins une couche colorante formant substrat (1'), contenant des polymères ASA, des polymères ABS, des polycarbonates, des polyesters, des polyamides, des polyétherimides, des polyéthercétones, des poly(sulfures de phénylène), des polyphénylène-éthers ou leurs mélanges, colorés dans la masse par les préparations pigmentaires selon les revendications 1 à 5, et
(2) au moins une couche de couverture translucide ou transparente (3) contenant des poly((méth)acrylates), des poly((méth)acrylates) résistant au choc, des fluoro(co)polymères, des polymères ABS, des polycarbonates, du poly(téréphtalate d'éthylène), des copolymères SAN ou leurs mélanges.

16. Feuilles stratifiées selon la revendication 14 ou 15, qui contiennent une couche formant substrat, constituée de polymères ASA ou d'un mélange de polymères ASA et de polycarbonates.

17. Pièces moulées en matière plastique, contenant pour l'essentiel une feuille stratifiée selon les revendications 14 à 16, qui délimite au moins une surface de la pièce moulée de matière plastique, et est alors reliée, par l'intermédiaire de la couche formant substrat, au mélange à mouler de matière plastique décoré dans le moule par gaufrage, injection, coulée ou expansion.

18. Pièces moulées de matière plastique selon la revendication 17, pour ce qui concerne lesquelles il s'agit d'éléments intérieurs et extérieurs de carrosserie automobile, de boîtiers pour appareils électroménagers, de supports de batteries, de cuvettes de siège, de revêtements de façade, d'étuis pour téléphones portables ou de revêtements de sol.
